# EUROPEAN PATENT APPLICATION

(11) **EP 1 351 477 A1**
(43) Date of publication of application: **08.10.2003**
(21) Application number: 02252422.7
(22) Date of filing: 03.04.2002
(51) Int. Cl.: H04M 3/493

(54) **An engine and a method for building a representation of structured information for use with a voice interface**

(71) Applicant: BRITISH TELECOMMUNICATIONS public limited company, London EC1A 7AJ (GB)
(72) Inventor: The designation of the inventor has not yet been filed
(74) Representative: Roberts, Simon Christopher

(57) **Abstract**

A reformatting engine 205 for use with a voice interface 210 for presenting Web pages to users over an audio link processes the code of a Web page to break it down into blocks and then assembles the blocks into sections which are suitable for use in the presentation. In particular, the blocks are analysed in terms of both content and type so that the sections can be described so as to support a mental picture of the visual layout of the Web page. The system supports the use of both static and dynamic grammars and the user, or a system administrator, can customise behaviour of the system by the use of user profiles.

## Description

The present invention relates to a user interface for accessing structured data or information such as that accessible over the Internet as Web pages. It finds particular application in a voice-based interface for user access to the Internet.

Stored data or information is generally structured to be accessed using an interface of a particular type. For instance, Web pages are generally structured using a markup language such as Hypertext Markup Language (HTML) or Extensible Markup Language (XML). Such documents are generally made up of storage units called entities which contain either parsed or unparsed data. Parsed data is made up of characters, some of which form character data and some of which form "markup". "Markup" encodes information relating to the document's layout and logical structure. A known user interface for accessing such documents is an application running on a client PC, the application relying on a processor to read the data and provide information to the application about the documents.

Although structured data is usually accessed using a screen-based interface in a client-server arrangement, the interfaces do not always have the same capabilities. For instance, the user may only have a limited screen available, such as a Wireless Applications Protocol (WAP) based telephone. In order to present information from Web pages on a small screen, it is known to use a markup language which is tailored to the WAP technology. That is, special WAP data is embedded server-side, within the Web page itself, either as an extension or a replacement to the markup language in which the page is normally constructed. The special WAP data is then read by client software which responds by presenting the page in a manner suitable for the screen available. Such arrangements have a disadvantage in that the Web pages have to be specially prepared by embedding the special data.

Alternatively, client-side applications are known which remove some or all system data (i.e. tag blocks) and return simplified on-screen text, or only the on-screen text, from an HTML page.

According to a first aspect of the present invention, there is provided a formatting engine, for formatting structured information which contains both content and descriptive material which describes that content, the formatting engine comprising:
i) an information processor for processing the descriptive material of the structured information; and
ii) information assembly means to assemble a representation of the information for access via a user interface
wherein the representation is assembled at least in part from the processed descriptive material.

Where the structured information is intended to deliver information to a user by visual means, such as on a screen or on paper, the content might for instance be the material intended for display to the user and the descriptive material might be markup material, constituting instructions concerning layout and logical structure of the displayed content, the instructions being for use by equipment receiving the structured information for delivery to a user. For instance, a page prepared using a markup language for display on a screen will usually contain material for display plus tag blocks as the descriptive, or markup, material. The tag blocks have related attributes which tell the receiving equipment such things as how big the displayed material should be, whether bold, italic or underlined, where it should appear on the screen and whether it performs a function such as providing a link to another file.

An embodiment of the invention might provide a re-formatting engine which takes structured information formatted for a first type of user interface and reformats it for access with a second type of interface. Interface "type" as referred to here is intended to indicate a method of delivery of information to the user and/or a method of receipt of inputs from the user. The first type of user interface may for instance be generally screen-based, such as a PC which delivers visual information to the user, and the second type of interface may comprise a voice-based interface such as a telephone line which delivers and receives information by audio link.

Thus a useful embodiment of the invention might be used to access Web pages over the Internet and to reformat them prior to delivery to the user so that they can be presented in a manner intelligible via a voice interface such as a telephone line. The voice interface may be supported by at least a limited visual display, such as that of a WAP phone, or may stand alone.

Embodiments of the present invention can be used with unmodified Web pages, and can therefore potentially access any page available over the Internet, but go significantly further than the client-side applications mentioned above which simply remove system data and return the on-screen text. Client-side applications of that type could not realistically be used to produce a useful form of Web page over a voice interface because very few Web pages are designed to be accessed in that way and the user would simply be faced with a long monologue.

Where a formatting engine according to an embodiment of the present invention is to be used with a user interface which is partially or wholly voice-based, it is preferable that the information assembly means assembles a representation of the information which provides an overview of the layout of the information. Preferably, the overview contains at least one link to another location in the information, in the manner of a link in an HTML document, which link can be selected and activated by a voice command. This allows a user to move around a page efficiently with just voice commands if necessary. The overview may also or instead contain at least one link to another document or file which can be selected and activated by a voice command.

In an embodiment of the invention, the structured information may contain more than one item of content and the descriptive material may contain values for the same attribute of at least two different items of content. The information processor may then process the descriptive material by comparing values for that attribute for the items of content so that the information assembly means can assemble a representation of the information which includes the result of the comparison.

Such a comparison is particularly useful where the information processor processes the values for an attribute so as to get a measure of an average for a whole piece of descriptive material. It is then possible to assemble a representation of the information which picks out aspects which depart significantly from the average.

An example of the above would be where the structured information contains text having different font sizes. An attribute contained in the descriptive material may then be font size and the information processor would compare the values given for font size so that the representation of the information could include an indication of relative font size. If the information processor assesses the average font size across the structured information, it becomes possible for the representation of the information to be, or to include, the following:
"There are three pieces of text of larger font size than the rest." The user could then potentially select these passages, for instance for reading out over a voice interface.

The descriptive material in the structured information may also contain an indication of type for more than one item of content. For instance, where the structured information has been prepared in a markup language, there will usually be indications where items of content are headings or links or body text. The information processor may then process the descriptive material by collating data on indications of type for items of content so that the information assembly means can assemble a representation of the information which includes such data.

An example of a representation of information including such data might then be, or include, the following: "There are three headings, three pieces of body text and four links." The user could then potentially select the links and/or the headings and/or the body text for reading out over a voice interface.

In a preferred embodiment of the invention, the information assembly means is arranged to provide a personalised framework from which structured information from more than one source can be preselected for access via the user interface. In embodiments which could potentially be used in accessing Web pages over the Internet, the personalised framework may itself comprise one or more files consituting a Web page, stored at an Internet site. The Web page could incorporate links to other Internet sites, or to preselected locations in other Web pages, so that the user can access dynamic content from several sources via their respective personalised framework.

(A Web page in this context is simply a file or a collection of files at an accessible URL and might include text, graphics, sound or any other content. For instance, a Web page may comprise one or more frames, each of which is a file, plus additional files such as style sheet definitions.)

In an embodiment of the invention for use with structured information such as Internet pages, particularly (though not exclusively) where created using HTML or a language syntactically similar to HTML, a representation of the structured information might conveniently be assembled as a hierarchy of software objects. Objects might represent respective components of the structured information and the information processor might be arranged to recognise one or more prespecified properties of the components so that components with one or more prespecified properties can be recognised and dealt with in a particular way in an assembled representation.

For example, the information processor may be adapted to recognise, from the descriptive material in the structured information, the type of each component of an Internet page, and thus its relative importance. It might recognise whether it is a menu, a link or a table. Where a component of a Web page is a section or block of text, the information processor may recognise characteristics of the section or block which enable it to identify it as having a particular character. For instance, if the font size is much higher than the average for the Web page, the information processor can identify that section or block as being of relatively high importance.

Further, where the information processor recognises information component type, it may be adapted to derive a title for a grouping of components of the same type for use in an assembled representation of the structured information. Such a title might be based on content or on the information component type. For instance, if the component type is hyperlinks, then the title for the grouping might be "Menu" or "List".

Particularly useful embodiments of the invention can be designed to present an Internet page to a user in a way that supports an easily comprehensible and maintainable mental model of the data, even if this is being done through a single channel interface, such as voice.

According to a second aspect of the present invention, there is provided a method of building a representation of one or more files, for use in an audio description of a Web page, the method comprising the step of processing code for use in screen presentation of the file(s), said processing comprising:
i) assembling a set of content components, each content component comprising content for screen presentation together with one or more attributes of the content;
ii) assembling a set of one or more page sections, each page section being associated with one or more content components;
iii) processing the attributes of content component(s) associated with at least one section to generate at least one property of the section(s); and
iv) building a representation of the file(s) which supports a description of the at least one section, said description including said property or properties thereof, for use in the audio description.

In such a method, a property generated for a section might be relative. For instance, said processing of attributes of content component(s) associated with at least one section may comprise comparing said attributes with one or more attributes for one or more other sections, perhaps for all the sections associated with the file or files for which a representation is being built. Thus a section can be described in relation to the rest of a Web page. Alternatively, a property might be generated with reference to a predetermined value or range of values for the property. If the latter is the case, and a collection of Web pages is being processed in which all of the Web pages share a particular feature, that feature can still be identified in the description.

The step of assembling the set of one or more page sections might comprise the steps of:
v) assembling a set of one or more page blocks, based on the structure of the code being processed, each block being associated with one or more content components; and
vi) processing the set of page block(s) to assemble the set of page sections, based on the distribution of content components amongst the page block(s).

The use of page blocks in this way allows a file or Web page to be divided up according to the code structure, and then to be manipulated further to create sections which reflect for instance an even, or a logical, distribution of contents. For instance, a Web page might be broken up into blocks of which some contain a high proportion of content components which are Hyperlinks. If those blocks are neighbouring on the page, a section might be created which includes all the blocks containing Hyperlinks and this section might then be described to the user as a menu.

The code might be written in a markup language and the set of page blocks may be based on a nested table structure of the code.

The number of sections in a set can be automated, for instance determined according to an algorithm, or can be determined manually by a user.

A method according to this second aspect of the present invention may further comprise the step of referring to one or more grammars for use in the description of the at least one section. Such grammars can be static, for instance encoded as part of a speech interface, or dynamic. For instance, a user might embed a grammar in a file, for instance a Web page, which the system makes reference to during an interchange with a user. This is useful for instance where multiple users might have different meanings for the same variable in an interchange with the system, such as the phrase "My page". User specific data, including data of this type, may be provided as a configurable user profile. Such a user profile might be configured by the individual user or by a system administrator for one or more communities of user.

Particularly flexible examples of a user specific, or community specific, mechanism is the use of a macro or a voice cookie. The above describes the provision of a dynamic grammar but the dynamic grammar could equally well be code which the system refers to during an interchange with a user.

Embodiments of the present invention can benefit from one or more of the following important characteristics:
- Building an internal representation of a Web page using software objects to represent components of the page at varying levels of abstraction.
- Applying a rule set to the objects that represent Web page components in order to assign a set of properties based on the components that they are composed of, such properties for instance being based on relative analysis of attributes of the components of the page.
- Using the table tags of a Web page to build a hierarchy of software objects that represent the structure of the page (how the text on it is organized).
- Allowing the simultaneous storage of different software objects to represent page structure, all referencing the same text on a page, and all members of a superclass that forms a common interface, allowing them to be used interchangeably.
- Using a "Block" class to build an interpretation of the apparent structure of a Web page using one of a set of algorithms, automatically determined by the way the HTML on the page is written.
- Intelligently breaking up the contents of a Web page into sections by analyzing its apparent structural hierarchy.
- Allowing the user to personally configure a set of pages (e.g. set up names for pages and their sections) in order to improve the usability of an associated voice interface.
- Using stored configuration information about a Web page to alter the properties and contents of its automatically generated sections.

A reformatting engine with a voice-based interface will now be described as an embodiment of the present invention, by way of example only, with reference to the accompanying figures in which:
Figure 1 shows schematically a network context in which the reformatting engine might be used;
Figure 2 shows in broad outline components of the reformatting engine and the data supporting it in use;
Figure 3a shows a typical dialogue between the reformatting engine and a user through the voice-based interface;
Ficure 3b shows an architectural overview and transaction example for a configuration tool used to configure a user's profile for use with the reformatting engine of Figure 1;
Figure 4 shows schematically elements of a Web page which might be processed by the reformatting engine of Figure 2;
Figure 5 shows a simplified version of the HTML code of the Web page of Figure 4;
Figure 6 shows a design for an object representation of a simple HTML Web page such as that shown in Figure 4;
Figure 7 shows a step in the analysis of a block hierarchy;
Figure 8 shows a sequence diagram for a simplified process of creating objects to represent the data in a Web page;
Figure 9 shows a sequence diagram for the interactions that take place in replacing special character codes;
Figure 10 shows tag blocks in a sample section of HTML source code;
Figure 11 shows data extracted from a tag definition file, and in particular examples of terminating tag lists;
Figure 12 shows an example of a style sheet;
Figure 13 shows a sequence diagram for the creation of software objects to represent part of the style sheet of Figure 12;
Figure 14 shows a sample piece of HTML code showing how table tags can be used;
Figure 15 shows an object reference map indicating how the structure of the Web page of Figure 14 can be represented as a set of object pointers;
Figure 16 shows a static model of the class structure of the reformatting engine; and
Figure 17 shows a sample personalised Web page which might be accessed using the reformatting engine of Figure 1.

### 1. Description of network context

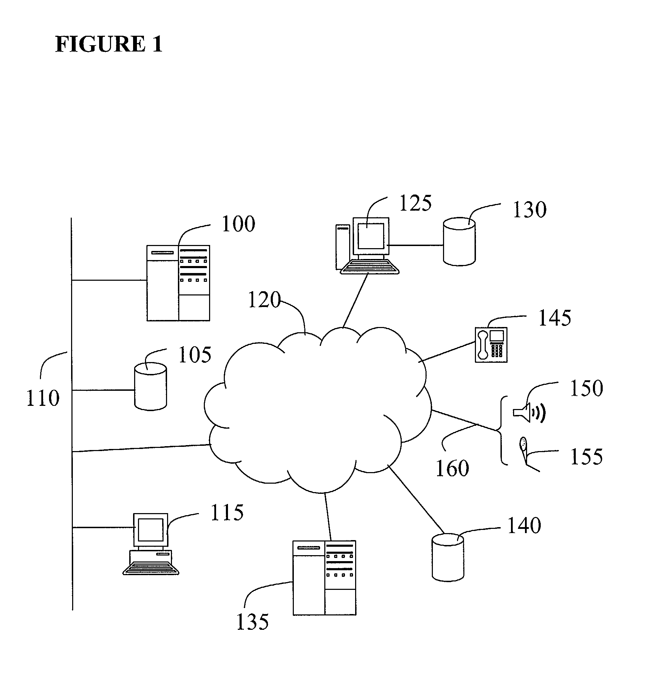

Referring to Figure 1, a possible general network context for the reformatting engine may be an Internet-based environment. The Internet 120 provides connectivity to data sources 105, 140 and servers 100, 135 for access by client devices, often via local networks 110. The client devices might be for instance personal computers 115, 125 or telephones 145. The personal computers 115, 125 will usually be connected to the Internet 120 via a local network 110 or directly. The telephones 145 may also be connected via a local network 110 or directly, using for example a "Voice over Internet Protocol" (VoIP), or may be connected via a conventional telephone network (not shown) using a voice and data bridge.

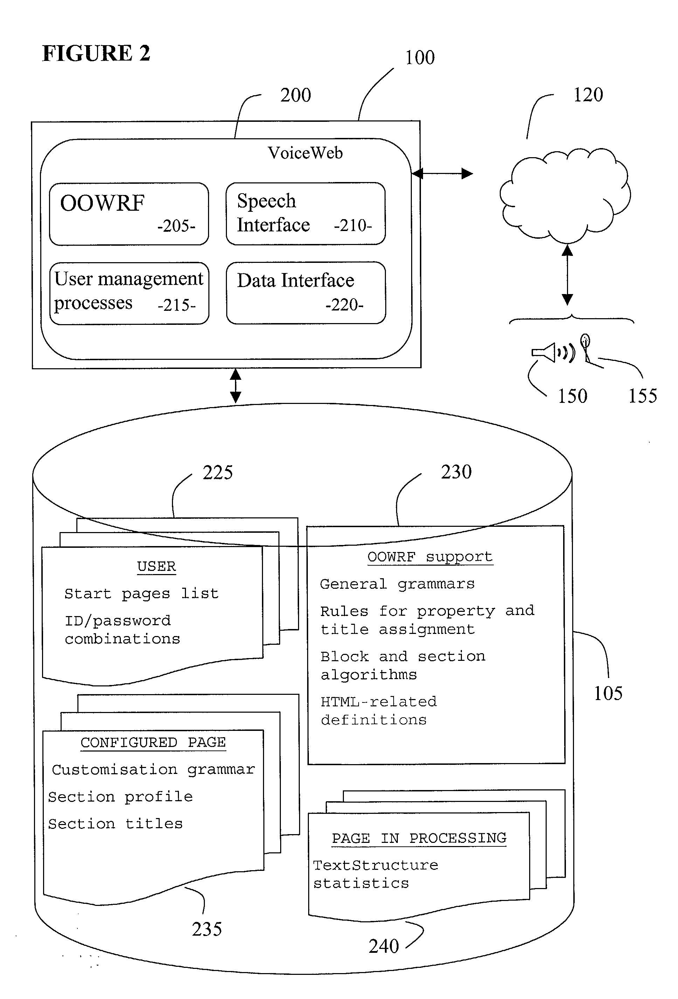

Referring also to Figure 2, the reformatting engine 200 (sometimes alternatively referred to herein as "VoiceWeb") comprises software installed on a server 100, 135. The server supporting the reformatting engine might be a server 100 in a local network 110, in which case client devices can dial in via the local network 110 without going beyond a network firewall, or might be a server 135 attached to the Internet 120 and thus potentially accessible more widely to client devices. In the following description, the reformatting engine 200 is installed on a server 100 in a local network 110. It can receive inputs from client devices such as personal computers 115, 125 and telephones 145 and it can access Web pages over the Internet 120 or other network, or directly from a local file store 105. The reformatting engine 200 can receive inputs from either end users or system administrators operating either personal computers 115, 125 or telephones 145, for instance for personalisation and configuration purposes. Importantly, it can provide speech-based outputs to users which can comprise Web-based textual information reformatted for a voice channel.

To configure the system, a personal computer 115, 125 can conveniently be used in an arrangement of known type. In this known arrangement, the personal computer 115, 125 acts as a client device provided with a screen user interface for viewing and/or downloading files, data or applications from appropriate servers 100, 135. The personal computer 115, 125 makes a connection to a port on the server machine which a server process is monitoring in order to respond to incoming client requests. Where the server machine is supporting the reformatting engine 200, an incoming client request at the monitored port is directed by the server process to the reformatting engine 200.

Once configured, the reformatting engine 200 of embodiments of the present invention is then capable of interactive use via a voice-based client device 150, 155 with no screen interface at all. The voice-based client device 150, 155 may for instance be of a standard type, such as an ordinary desk or mobile telephone. It can be represented as shown in Figures 1 and 2 as simply a microphone 155 together with a speaker 150 and it communicates with the reformatting engine via a speech interface 210.

The reformatting engine 200 acts as a client device in respect of pages requested by a user. It can do that in respect of pages stored on its own server 100 or pages stored on any server accessible over the Internet 120.

### 2. System Overview

Referring to Figure 2, the reformatting engine 200 is a speech-based Web browsing application, sometimes referred to herein as "VoiceWeb", which is based on three primary sets of processes, the "Object Oriented Web Reformatting Framework" ("OOWRF") 205, a speech interface 210 and user management processes 215. These three processes have access to data stored either as text documents or in a system database 105, via a known form of data interface 220.

The main function of the reformatting engine 200 is to reformat text-based Web pages for voice access and this is provided by the OOWRF 205 which is an application for formatting the source code of an Internet page into a set of easily manipulated structures. The speech interface 210 delivers the reformatted Internet data to the user and provides the mechanisms for spoken communication using speech recognition and synthesis. The user management processes 215 support tasks such as personalisation or customisation and interaction in this context is usually via the data interface 220.

The OOWRF 205 is object-oriented, but the speech interface 210 is developed primarily in the language known as "C" (without object use).

The speech interface 210 allows a user to interact with the reformatting engine 200, for instance on a mobile phone, and get spoken access to any page over the Internet. Once the user has dialled in, they need to be able to interact with the system so as to identify the page they require access to. Thus the reformatting engine 200 needs to provide a way for the user to activate a link and the speech interface 210 together with the user management software 215 do this.

Although it is possible to use the speech interface 210 for configuration, the data interface 220 is usually preferable, in terms of speed and flexibility, and it can be used for customisation and personalisation. For instance, the data interface can be used to configure the speech interface 210 to offer preselected links. This can be done for instance either by a system administrator, acting for a community of users, or by individual users. One or more preselected links might go to a customised or personalised page and again the data interface 220 can be used to customise such a page.

The data interface 220 itself is of known type and is therefore not discussed in detail. Data which can be loaded to, or is generated in use of, the system for administration, personalisation/customisation and to support the OOWRF 205 comprises:
**User-related information 225**
   - lists of start pages including Web labels and URLs
   - ID/password combinations for pre-selected personalised pages
**OOWRF supporting information 230**
   - grammars for non-customised pages
   - rules for title assignment and property allocation
   - block and section algorithms
   - HTML-related definitions such as special characters, style sheets and tags
**Configured page information 235**
   - grammars for customised pages
   - section profiles
   - section titles
**Page in processing 240**
   - TextStructure statistics

### 3. System Functionality

### 3.1 Use of configured system by user 300

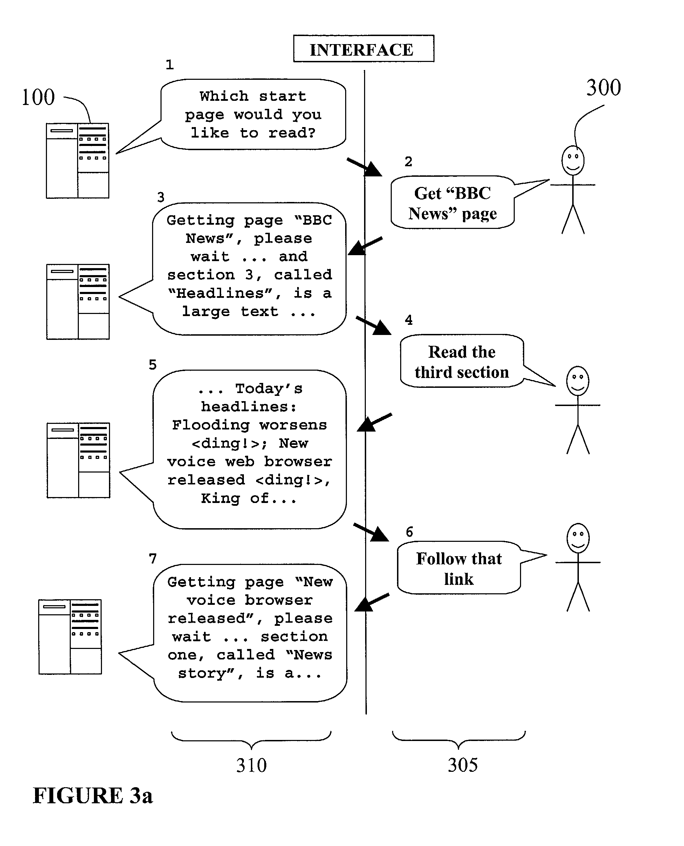

Referring to Figure 3a, one way in which the configured system can operate is as follows.

A set of HTML pages is selected as start pages for either an individual user or for a community of users. These pages are stored at URLs, local or remote, and each page is given a Web label, or title, which uniquely identifies it. The system stores a list of Web labels against URLs for the start pages. When a user wants to use the system, they dial in. The system responds with a voice message asking the user which start page they wish to select. The user responds by saying one of the Web labels and the system uses the list to find the page. The page is then processed by the reformatting engine 200, using the OOWRF 205, and described to the user who can then use the system to navigate around the processed page and/or activate links to other pages. Any other page the user selects is processed in the same way.

The following describes the interaction between user and system in more detail.

The user 300 uses their client device 150, 155 to access VoiceWeb 200 on its server machine 100. VoiceWeb 200 responds by sending a speech message 310 to the user 300 and there is an interaction of speech messages 310, 305 in each direction.

The initial response by VoiceWeb 200 to the user 300 allows the user to select a Web page to be read: *"Which start page would you like to read?".* The user has a list of "start pages" accessible by the system, each of which has a "Web label" which is a word or set of words entered as the user's title for the page. For instance, this list might be stored in the system database 105 or on the server machine 100 as a list of each start page's URL and Web label. The user responds by speaking the Web label for the start page they select. In the example shown in Figure 3a, the Web label selected is "*BBC News*".

VoiceWeb 200 downloads the selected start page, meanwhile informing the user by outputting the message *"Getting page "BBC News", please wait..."* and processes it using the OOWRF 205 to convert it for use over a voice interface. For instance, the OOWRF 205 splits the page into numbered sections. Each of these sections is then briefly summarised in some way and reported to the user 300. The user can choose a section to be read out by saying its assigned title or the number of the section. For instance, in the example shown Voice Web has offered a section 3 called *"Headlines".* The user can select this section by saying "*Read Section 3*", "*Read the third section"* or "*Read Headlines"* and VoiceWeb 200 responds by reading out the selected section.

While the text in the page is being read to the user, any embedded link is identified to the user 300 by a short sound. This is indicated in Figure 3a by the use of <ding!> to represent a bell ring or buzzer after the two link texts *"Flooding worsens"* and *"New voice Web browser released"* have been read. The user 300 can select one of these indicated links by making a predetermined sound in response, such as saying *"Follow that link".* VoiceWeb responds by activating the selected link either to move to a different place on the current page or to retrieve the page that the link refers to. In the example shown in Figure 3a, the selected link has been to another page and VoiceWeb responds by saying *"Getting page "New voice browser released", please wait*...". When the new page is retrieved, VoiceWeb 200 processes it in the same manner as a start page, described above, and so converts it for use over the voice interface, again by splitting it into numbered sections for selection by the user.

Thus the user 300 can use VoiceWeb 200 to browse the Internet.

### 3.2 Access and personalisation

As described above, VoiceWeb 200 has the potential for a user 300 to personalise its response. For instance the list of start pages might be user-specific in at least two different ways. Firstly, each user might select their own list of start pages and this would be influenced by individual factors such as each user's role in the workplace. Secondly, a given Web label might be used by two different users for two different URLs. An example of the latter is the Web label "My Page". Such a Web page would necessarily be located at different URLs for different users.

Personalisation of this type can be managed within VoiceWeb 200 by a set of user management processes 215 supported by user data held by the VoiceWeb system. Such user data might include for example, for each user identity, a list of Web labels against URLs and one or more grammars (or lexicons) which the user might use to interact with non-customised pages. Once the user's identity is known, a user management process can ensure that the system refers to the user data so that it interacts with the user appropriately, for instance by downloading a page from the correct URL for that user and then by using a correct grammar in respect of the page.

In order to provide this level of personalisation, VoiceWeb 200 requires identification data in respect of the user. This could be acquired automatically, for instance using calling line identity ("CLI") where the user accesses VoiceWeb by telephone, or it could be done by requiring the user to input a personal identifier, such as a user name and/or password.

It is more difficult to provide personalisation of Web pages accessed, so that one Web page at one URL appears different to different users. For instance, it might be desirable that a page giving weather information tailors the information to include a user's home town location. The reason it is more difficult to personalise the Web pages is that the Web server 135 delivering the Web pages is responding to the VoiceWeb application 200 as a client and not to something associated with the user, such as an application running on a user's PC. A Web server 135 often identifies the client by looking for a cookie from a requested Web site on the client machine 100. In the case of VoiceWeb 200, the client machine 100 is the machine 100 supporting VoiceWeb, which fetches and processes pages for multiple end users. Since only one identification cookie can exist for each requested Web site, it is not possible to use cookie functionality to identify individual users. However, for any site that requests identification data entry (e.g. username entry for personal email and/or password), it would again be possible to identify individual users and thus to provide personalised Web pages. This form of personalised access can be done on behalf of the user by the VoiceWeb system 200 by storing the identification data entry for the relevant Web site and user, and using it when the user logs on to the site via VoiceWeb. The identification data could for instance be entered into a VoiceWeb system database 105 by the user via the personal computer 115, 125 and data interface mentioned above.

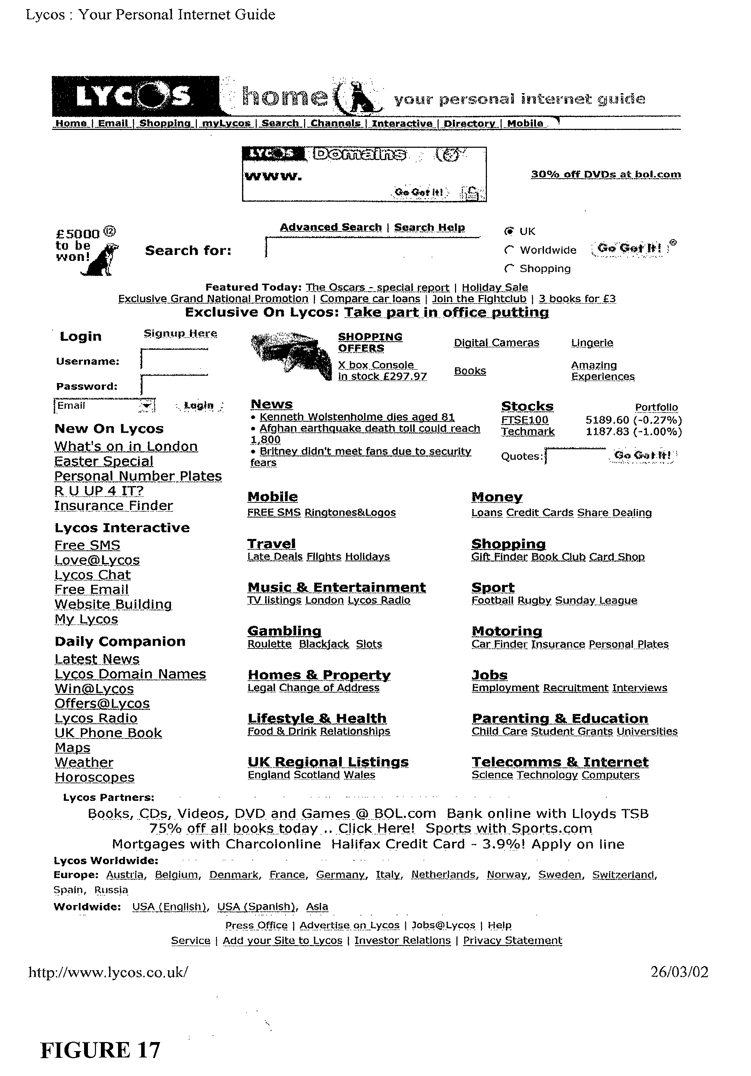

It should be noted that personalized or customised pages are just like any other pages as far as the OOWRF 205 is concerned. Taking the example of a start page "My Page" requested by a user via the voice portal, the user management software 215 determines the identity of the user and dynamically generates the start page using data stored in respect of that user in the system database 105. The generated start page is then processed by the OOWRF 205 and sent to the user's client device 150, 155 in the same way as a Web page accessed over the Internet and containing static data would be sent. Therefore no special actions need to be taken for dynamically generated (e.g. personalized) pages. (An example of such a page is shown in Figure 17.)

### 3.3 Configuring the System

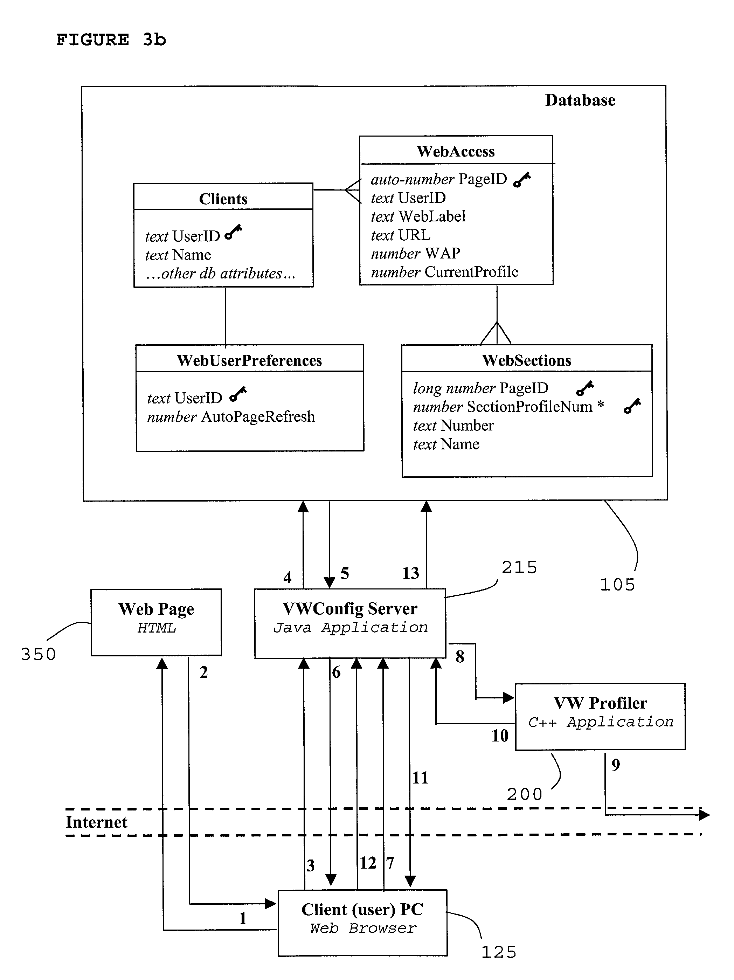

System configuration is primarily the loading of data mentioned above and includes loading user-related information 225, OOWRF supporting information 230 which will be used by the system in processing Web-based pages to reformat them, and data specific to configured pages 235. Referring to Figure 3b, a VoiceWeb Internet configuration tool is provided for use in configuring a user's VoiceWeb profile, allowing the user to set up pages they want to be able to visit using a voice label from the voice interface.

Data may be stored in a system database 105, as indicated in Figure 2, but in practice data may also be stored in other forms. For instance dynamic grammars, such as lists of page labels or section titles which are specific to a user/page combination, might be stored in separate files which are compiled at runtime in response to user speech input. HTML-related definition files, including data of that general type such as style sheet to tag mappings and character code mappings, can be stored and accessed as text files.

Further, Figure 2 shows rules for property and title assignment and algorithms for separating blocks and sections. These might conveniently be provided as an integral part of the OOWRF code rather than stored as data. However, if this is the case, it is preferable that they are designed to be logically apart from other code so that they can be easily amended.

Referring to Figure 3b, use of the VoiceWeb Internet configuration tool 215 by a user comprises the following steps, numbered as shown on Figure 3b:
**[1]:** The user visits a configuration Web page 350 using their Internet browser 125.
**[2]:** A Java applet is loaded into the user's Web browser 125.
**[3]:** The user's PC 125 initialises the applet which logs in to the VoiceWeb Internet configuration tool 215 ("VWConfig Server") using socket-based communication.
**[4]:** The configuration tool 215 requests the user's profile from the relevant database 105 (could be locally or remotely accessed).
**[5]:** The database 105 sends the user's profile.
**[6]:** The configuration tool 215 returns configuration information to the Java applet running on the user's PC 125. The configuration information returned depends on the request made by the client (the applet) and at this stage would comprise a set of information about each page, such as the URL, label and the number of sections it is split into.
**[7]:** The user selects a configured or configurable page 235, for instance by clicking on a page name in a list-box, and the applet returns the selection to the configuration tool 215.
**[8]:** The configuration tool 215 executes VoiceWeb 200 with parameters indicating the requested page.
**[9]:** VoiceWeb 200, using the OOWRF 205, fetches the content of the requested page from the Internet and splits it into sections, creating a "page profile". VoiceWeb 200 returns the data stored in each section and the results are stored in an output text file.
**[10]:** The configuration tool 215 parses the output text file and stores the results in Java objects.
**[11]:** The configuration tool 215 sends the results to the user's PC 125, which stores them locally.
**[12]:** Where the user uses the interface to update a page, for instance by selecting a label and changing the text or by changing the number of sections, then the user makes a request to update the information for a configured Web page.
**[13]:** The configuration tool 215 updates the user's profile 225 in the database 105 accordingly.

The data stored in the database 105 to support the configuration tool 215 is indicated in Figure 3b and includes user specific data such as recorded preferences for page refresh, page lists with voice labels and URLs, and section data for the individual pages.

The output text file for a page contains the following data:
- administrative data recording the date and time at which the file was created
- the number of sections in the page profile
- the name, and the number within the profile, of each section
- the text content of each section, with markers "°T", "°S" to show the end of each text object and section

The configuration tool 215 and text files support interaction using a graphical user interface ("GUI") which lists the pages which the user can select for configuration. When a page has been selected, the GUI shows its current voice label for that user and the number of sections it contains. It lists the sections by name and the user can select a section from the list. The GUI then shows the voice label for the selected section and its text contents, together with the date and time on which it was last refreshed. Using this GUI, the user can change voice labels, request automatic selection of the number of sections in a page, or can manually reset the number, can add or delete pages, including pre-configured pages optionally prepared by a system administrator, and can select regular or immediate refreshing of the page.

### 4. The OOWRF 205

The heart of the reformatting engine 200 lies in the OOWRF 205 which is an object-oriented ("OO") framework. Frameworks are the basis of a known technique for constructing reusable code. An OO framework can be used to generate applications for a particular domain. A framework itself is not executable. It contains some implemented code but it also contains points of flexibility which are abstract classes or methods. These must be instantiated by implementing application specific code before an application can be run.

Abstract classes and abstract methods are both terms known in object-oriented programming and the same usage is intended herein, unless the context clearly indicates otherwise. Thus an abstract class is a form of superclass, used to model a concept which in practice is only instantiated via its subclasses. An abstract class may contain some methods common to all the subclasses which can be directly implemented but it may also contain abstract methods which are only implemented via subclasses.

The aim of the OOWRF 205 is to be able to analyse visual aspects of a Web page in a way that enables a clear description of the page to be given to the user using a non-visual interface and so that the user can interact with the page using the non-visual interface.

The OOWRF 205 operates by converting the HTML code which constitutes a Web page into a set of objects. HTML code contains all the information necessary for displaying the content of the Web page. It therefore contains the content itself, information about the content such as size and colour, and information about the position of the content in the Web page. The OOWRF 205 takes this information and not only converts it to a set of objects but also analyses it to arrive at relative properties of different parts of the Web page. This analysis allows VoiceWeb 200 to inform the user about visual aspects of the Web page which are not directly expressed in the HTML code at all. For instance, a particularly large piece of text will be described in the HTML code because it has a large size attribute, but the size attribute per se does not give the information that the piece of text is larger than other pieces of text. Such relative information is not necessary where a screen interface is to be used since a visible Web page shows relative sizes of text to the user visually. The analysis done by the OOWRF 205 allows it to extract relative information of this type and thus to inform the user via the voice interface 210 for instance that one piece of text is larger than other pieces of text.

The analysis performed by the OOWRF 205 has two aspects. In a first aspect, it represents each piece of text in a Web page as a software object called a text object and associates with the text object properties which characterise the piece of text, at least some of which properties are relative between pieces of text. In a second aspect, it breaks a Web page into sensible sections for description to the user. It does this in part by using table information embedded in the HTML tags. This is possible because in practice the layout of a Web page in almost all cases is expressed in nested tables which therefore give a good indication of related pieces of text.

The following describes the first aspect of the OOWRF 205 in more detail. The second aspect is covered in more detail later in this specification.

To represent each piece of text as a software object, the OOWRF 205 extracts characteristics of the text. For example, a headline on a news site could usually be defined by the following characteristics:
- one (number of text objects)
- small (in terms of number of words)
- large (in terms of font size)
- bold (font type)
- text (ie no graphics)

VoiceWeb could describe this as *"One small piece of large*, *bold text".*

The body of the story on the other hand would usually be defined as:
- one (number of text objects)
- large (in terms of number of words)
- small (in terms of font size)
- (font type)
- text (ie no graphics)

VoiceWeb 200 might describe that to the user as *"One large piece of small text".*

A piece of text is identified for representation as a text object if it is the only text lying between one set of tags in the HTML code for the Web page. All the text in one text object must share a set of tags that apply to it.

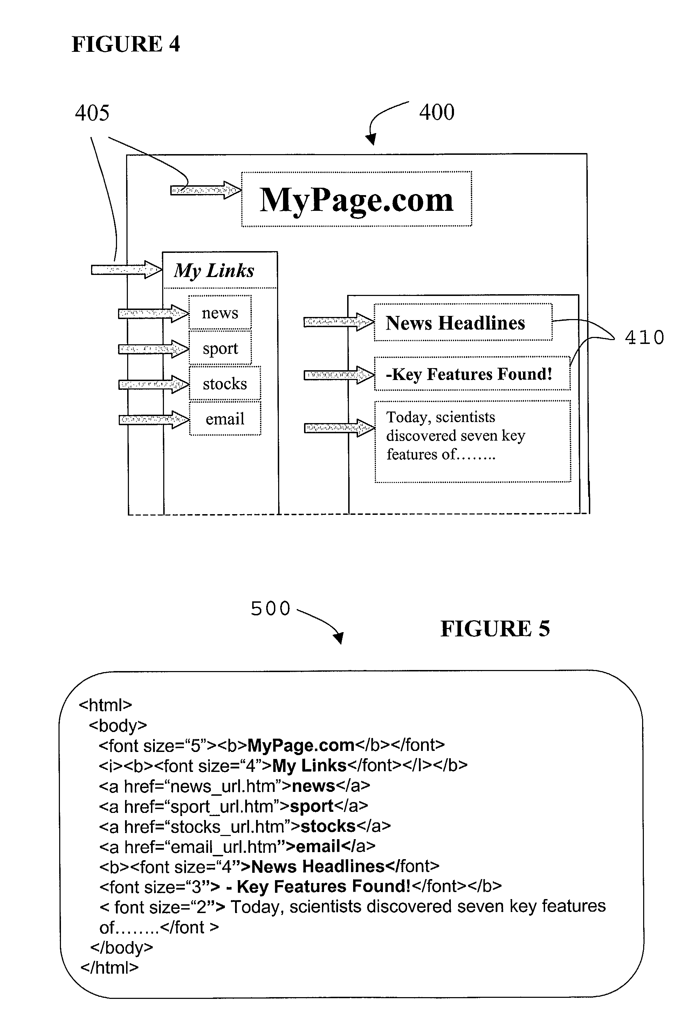

Referring to Figures 4 and 5, a sample Web page 400 and the HTML code 500 (excluding text positioning code) for the page can be seen. In Figure 4, each piece of text which will be represented by the OOWRF 205 as a text object is identified by a box 410 and arrow 405 and these pieces of text can be seen as content usually shown in bold in the HTML code in Figure 5.

Taking the code shown in Figure 5, the code contains text, tags, tag attributes and data for the attributes. For instance, the third line down can be separated out as follows:
Text- "MyPage.com"
Tags- "html", "body", "font" (attribute "size" = "5"), "b"

The fifth line down can be separated out as follows:
Text- "news"
Tags- "html", "body", "a" (attribute "href" = "news_url.htm")

These two examples might be described by VoiceWeb as *"One small piece of large, bold text*" and "*One small piece of text <ding!>*", the second description indicating the presence of a link. In practice, given the high proportion of links in the example shown in Figure 5 then VoiceWeb might describe this as a *"link area"* or *"menu"* in the page summary or in the title for the section. It should be noted that the user can avoid long menus and link areas if they wish either by not having VoiceWeb read the sections they belong to or by using a skip command.

In HTML, tags that start with a forward-slash ("/") in actual code are conventionally closing tags; these terminate the description of what the tag does (eg "B" for bold) that was declared by the last opening tag of the same type. In the example above, the text "MyPage.com" will be identified for representation as a text object because it lies between opening and closing versions of tags "html", "body", "font" and "b".

### 4.1 OOWRF class structure

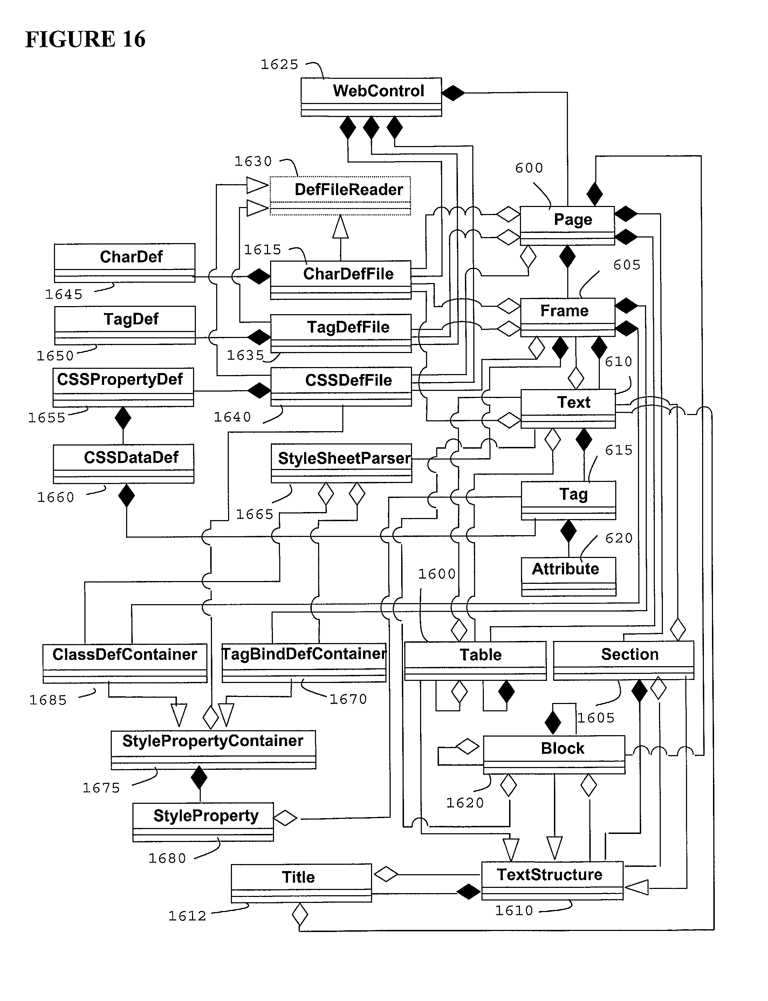

Referring to Figure 16, the following is a description of the class structure which forms the basis of the OOWRF 205.

### WebControl:

Simple high-level Interface class for quick and simple use of the framework

### Page, Frame, Text, Tag, Attribute:

Classes that represent the data in a page at varying levels of abstraction

### TextStructure, Table, Block, Section, Title:

Classes that group text into structures

### DefFileReader:

Simple low-level class used to help read OOWRF .def files

### CharDefFile, CharDef:

Classes to read and store the data in the Character Definition File (*CharDefs*.*def*)

### TagDefFile, TagDef:

Classes to read and store the data in the Tag Definition File (*TagDefs*.*def*)

### CSSDefFile, CSSPropertyDef, CSSDataDef:

Classes to read and store the data in the CSS1 Style Sheet Definition File (*CSSDefs*.*def*)

### StyleSheetParser:

Class to parse basic CSS1 style sheets

### StylePropertyContainer, ClassDefContainer, TagBindDefContainer, StyleProperty:

Classes to store the style information for a page

Taking these classes in turn, their roles and behaviours are described below.

### 4.1.1 WebControl 1625

The WebControl class 1625 acts as an interface to all the Web data objects. It provides a simple way to retrieve Web pages, and contains functions to return data from the page grouped into sections. It can also be used to retrieve a Page object representing the page which can then be used to perform more complex functions if necessary. The class 1625 has a constructor which constructs a WebControl object, and fetches and processes the data with the tag, character, and CSS style sheet definition files.

The methods of the class 1625 provide the following functions:
- Fetching and processing a page at a given URL. This method "Get_Page" must be called before any other methods in this class.
- Displaying the currently processed sections in terms of each section's title, and the Text objects and Tables that belong to it
- Returning the **base URL** for the current page
- Returning the **URL** of the current page
- Returning the number of Section objects generated for the current page
- Returning a pointer to the most recently fetched Page object
- Returning a pointer to a section having a specified section number in the current page, or **NULL** if the specified section number is out of range. (Section *numbers* start from **1**, not **0**.)

The "Get_Page" method includes both a <url> parameter and a <base_url> parameter. If a value for **<base_url>** is supplied, this is used as the "base" URL for the page. For example, to get the page "www.mysite.com/mypage", it would be possible to call *Get_Page ("mypage", "www*.*mysite*.*com")*.

Once a page has been fetched, it is automatically processed to generate table objects and section objects. The "Get_Page" command which calls the method for fetching and processing a page includes an **<ideal_num_sections>** parameter which allows the user to input a preferred number of sections that the page should be split into, or to input a default value "0" which allows the OOWRF to set the number of sections. An approximate number of section objects is determined automatically by the number of tables and characters in the Web page, that is its size and complexity, and the algorithm for generating section objects is further discussed later in this specification. The number of sections returned is equal to **<ideal_num_sections>** unless that is too high, in which case the maximum number of sections possible is returned.

If a page has already been fetched, all objects (and their data) created to represent the existing page are deleted if the method "Get_Page" is called again. No more than one Page object is stored at any one time; when Get_Page is called the existing page object (if there is one) is deleted from memory. If there is a requirement to have more than one page available at any one time, the WebControl class can be bypassed and Page objects can be used directly.

The method "Get_Page" returns **true** if the page is fetched successfully and is not empty, else returns **false** and a subsequent call to Get_Page_Object will return **NULL.** Error status code pages such as the "404 page not found" are not returned; any status code other than 200 (success) results in this method returning **false**. The status code from a frame retrieval attempt can be fetched using the "Frame::Get_Status()" method if required.

### 4.1.2 Page, Frame, Text, Tag and Attribute 600, 605, 610, 615, 620

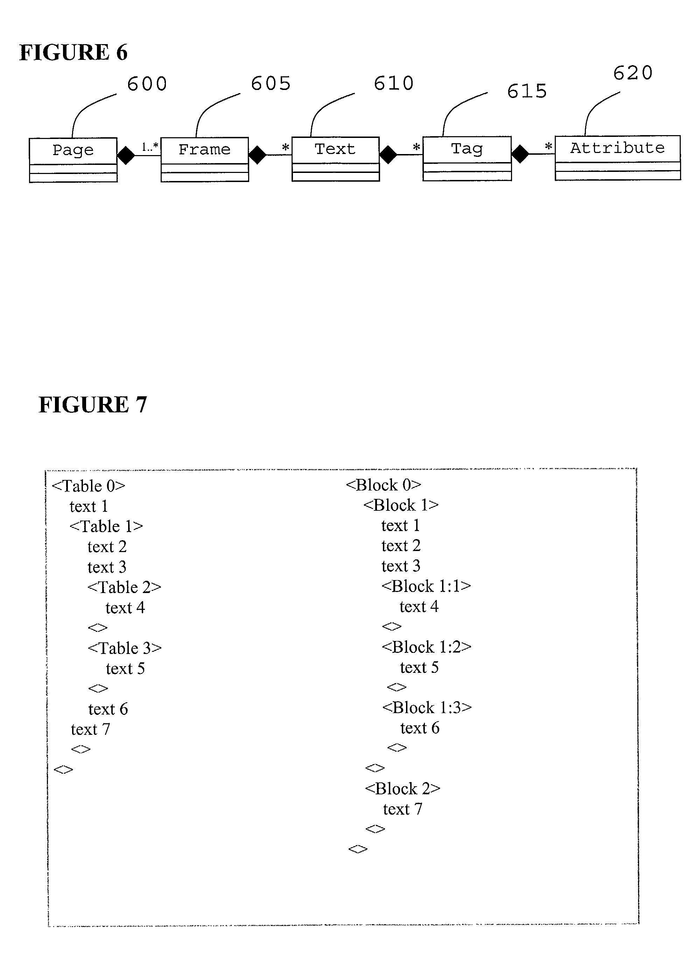

Referring to Figure 6, these classes embody the simple data in an HTML page. One Web *Page* object consists of a set of one or more *Frames* objects (a frame is a portion of a Web page which has its own URL). Each frame object contains a set of *text* objects, which each store one piece of text. Each *text* object also stores the set of *Tags* that apply to it, and each tag object stores the set of *Attributes* that are given with the tag. This structure can represent any Web page written at least in part using HTML. The classes *Attribute* and *Tag* 620, 615 are simple container classes which accommodate methods to search for the data within them. The *Text* and *Page* classes 610, 600 contain tags and frames respectively. The *Frame* class 605 includes a method that can fetch pages from the Internet. This can be implemented relatively easily by using the MFC (Microsoft Foundation Class) library which contains classes with which to do it.

The WebControl class 1625 is the top-level interface class - it is there to simplify operations that are performed by other classes. However, there is internal task delegation and dispersed functionality amongst the classes, in known manner. An example is the WebControl::Get_Page method which in practice creates a Page object for the page and asks it to get a page. The Page object in turn creates Frame objects for each frame in the page, which are asked to parse the HTML at their respective URLs, creating Text objects, and so on. The WebControl object then asks the Page object to try different section division methods until one is satisfactory, and so on.

### The Page class 600 -

This represents one Web page. It has a constructor as follows:
Page (CString* in_url, TagDefFile* **in_tag_definitions,** CharDefFile* **in_char_definitions**, CSSDefFile* **in_css_definitions,** CString* **in_base_url)**

This constructs a Page object for the Web page at URL **<in_url>** with base URL **<in_base_url>.** The arguments **<in_tag_definitions>, <in_char_definitions>** and **<in_css_definitions>** are pointers to the singleton TagDefFile, CharDefFile and CSSDefFile objects used to represent the definition (.*def*) files for the framework.

The methods of the Page class 600 provide the following functions:
- fetching a page from the Internet
- getting the number of frames in the page
- displaying the page's source code
- getting a specific Frame object owned by the page
- getting the URL of the page
- getting the base URL of the page
- forming a Blocks hierarchy based on DIV breaks and table rows in the page
- forming a Blocks hierarchy based on paragraph breaks and table rows in the page
- forming a Blocks hierarchy based on table rows in the page
- forming a Blocks hierarchy based on tables in the page
- resetting the manipulated blocks structure stored for the page to the original Blocks hierarchy
- deleting the blocks structure stored for the page
- forming an automatic or given number of sections
- displaying info about the sections
- getting the number of sections currently stored for the page
- getting a specific Section object
- getting the number of table objects
- getting the Table object at a given (depth-first recursive) index in the Table hierarchy
- getting the Table object with a given ID
- getting the ideal (recommended) number of sections in which to split the page
- getting the URL path (URL minus any filename that might exist) of a given URL
- getting the base URL of a given absolute URL
- getting a resolved version of a given relative URL using a given existing base URL and URL path

### (References herein to "DIV" and "P" tags are references to those tags as well known in HTML technology.)

Upon calling the method **Retrieve_Page**, a Page object first creates a Frame object for the URL given and it is this Frame object which actually retrieves the page. The Page object then scans the tags in the page for one that declares a new frame within the page. New Frame objects are then created for each of the frames declared, and are stored in a vector in the order in which the declarations are encountered. This method returns **0** if a page is fetched from the Internet and contains some data, otherwise it returns an error code determined by the MFC Internet classes. -1 is returned if the page is fetched successfully but doesn't contain any data.

The method **Retrieve_Page** also causes the Page object to create Table and Block objects. If the user of the Page class 600 calls the method **Form_Sections,** then Sections are also formed. The Page object stores the sets of Table, Block and Section objects. The contents of each of these sets represent a complete set of references to all the Text objects in the entire page (across all of its composite Frames). These objects arrange references to Text objects into special structures or groups, and are all subclasses of the abstract class TextStructure.

There are at least two methods for creating Section objects, as follows:
void Form_Sections ()
void Form_Sections (int **ideal_num_sections,** bool **use_progressive_block_model)**

If **ideal_num_sections** is either not supplied or is set to 0 or less, the first method calculates the approximate number of sections to create according to the number of characters and the number of Tables in the page. For an "average" page, this would be about 3 to 5 sections. The exact number of sections always depends on the structure of the Tables in the page. More than one algorithm might be available for forming sections and an algorithm could then be selected by setting a SECTION_GENERATION_METHOD definition in *GlobalDefs.h*, a global definitions header file that all classes include. An algorithm used in embodiments of the present invention uses the Blocks structure. A section algorithm is further discussed later in this specification.

Concerning the Page class constructor mentioned above, **<in_url>** is the URL of the page, either absolute or relative to **<in_base_url>.** Even if **<in_url>** is absolute, **<in_base_url>** is still used should any *HREFs* in the Web page be relative. It should be noted that the base URL can be changed by the contents of the Web page (i.e. **BASE** tags), and can therefore be different from the string passed to the constructor.

### The Frame class 605 -

A Frame object represents one frame in a Web page. It contains a vector of Text objects. The Frame class 605 contains the code that fetches and parses Web pages (either on-line or off-line, as defined by **GlobalDefs.h**), and as such could be considered the most important class in the OOWRF framework.

The Frame object constructor is as follows:
**Frame** (CString* **in_url,** CString* **in_base_url,** TagDefFile* **in_tag_definitions,** CharDefFile* **in_char_definitions,** CSSDefFile* **in_css_definitions)**

In the above, **<in_tag_definitions>, <in_char_definitions>** and **<in_css_definitions>** are pointers to the singleton TagDefFile, CharDefFile and CSSDefFile objects.

The methods of the Frame class 605 provide the following functions:
- Displaying the HTML source of the frame.
- Returning the **URL** or the current base **URL** of the frame
- Getting the page given by **<url>,** and creating Text objects to represent it. This method returns true if the page was fetched successfully, else returns **false.**
- Returning the number of Text objects created in the Frame.
- Returning the status returned from the last time Web data was fetched and using this to determine the cause of an error. The **Frame_Retrieval_Status** enumeration is defined in **GlobalDefs.h.**
- Returning a pointer to the Text object at the position **<index>** in the frame's Text object vector, or **NULL** if **<index>** is out-of-bounds.

### The Text class 610 -

The Text class 610 is designed to store a piece of Text from a Web page. A Text object usually contains text from a Web page that is enclosed by two tags, e.g. <*B*> *a piece of bold text <*/*B>.* A Text object also stores the set of tags that apply to it as a vector of Tag objects and, in the example, the vector's last entry would be a Tag object of type **B** with no attributes. The Text object automatically performs special character conversion (e.g. "&nsbc;" is converted to its equivalent as defined in the CharDefs.def file, whose default value is a space character). All Text objects used to directly represent text in a Web page have a unique ID so as to differentiate themselves from other Text objects. Also, Text objects store a reference back to the Frame and Table objects that directly own them.

Sometimes, Text objects are "empty". These contain no text but represent a set of properties that may not apply to a piece of text. Empty Text objects are created when a tag is found on a Web page that has been declared in TagDefs.def as not having a "closing tag".

The Text object constructors are as follows:
Text (CString* **in_text,** CharDefFile* **in_char_definitions,** Frame* **in_owner_frame,** int **in_text_id)**
Text (CString* **in_text,** CObArray* **in_tags,** CharDefFile* **in_char_definitions,** Frame* **in_owner_frame,** int **in_text_id**)

These construct a Text object with text **<in_text>** and ID **<in_text_id>.** To add a vector of tags to the Text object, **<in_tags>** is supplied as a pointer to a CObArray, this array containing pointers exclusively to Tag objects. The contents of the CObArray are copied so the object passed in can be safely deleted after the Text object is created. The argument **<in_owner_frame>** is a pointer to the Frame object that owns the relevant Text object.

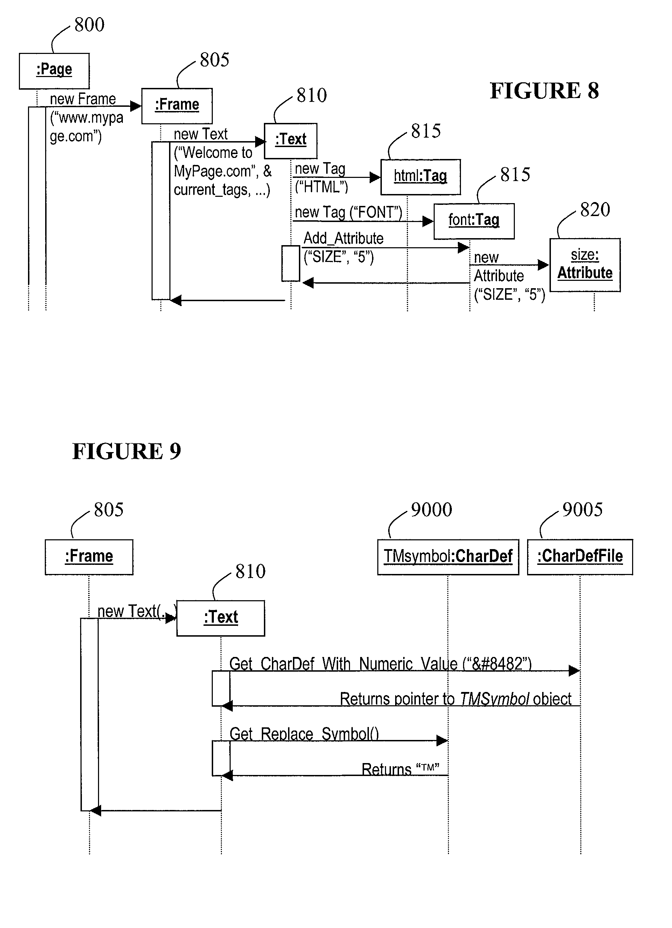

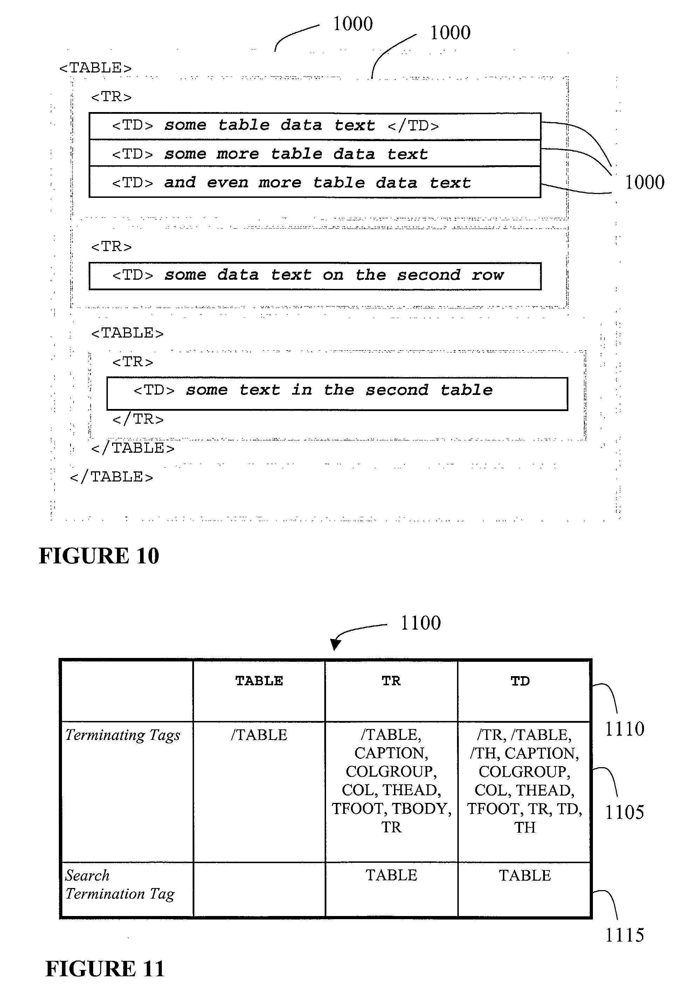

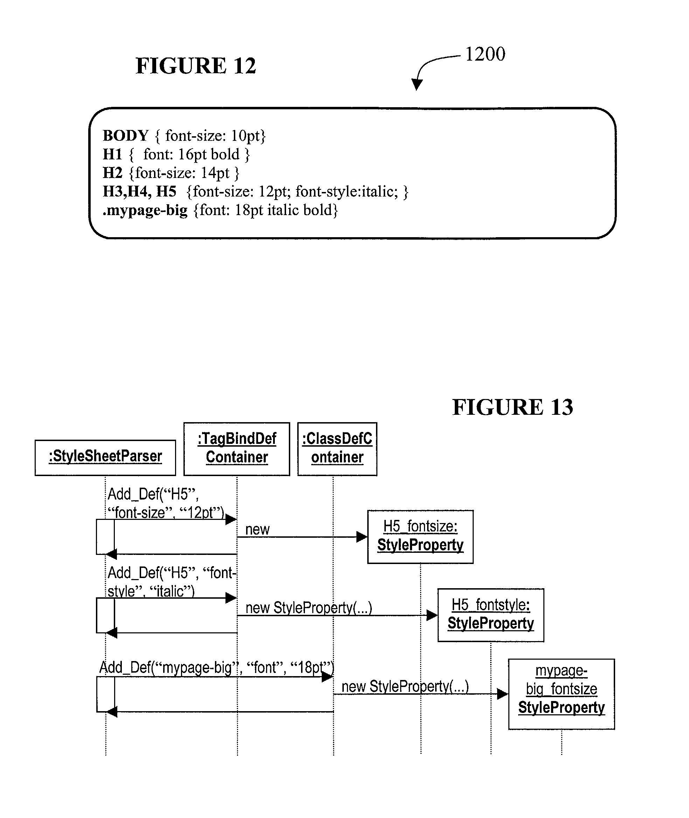

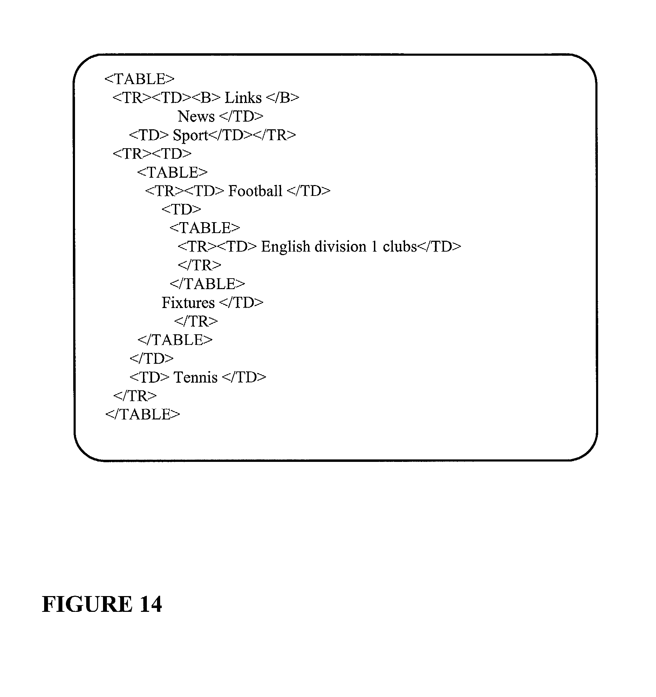

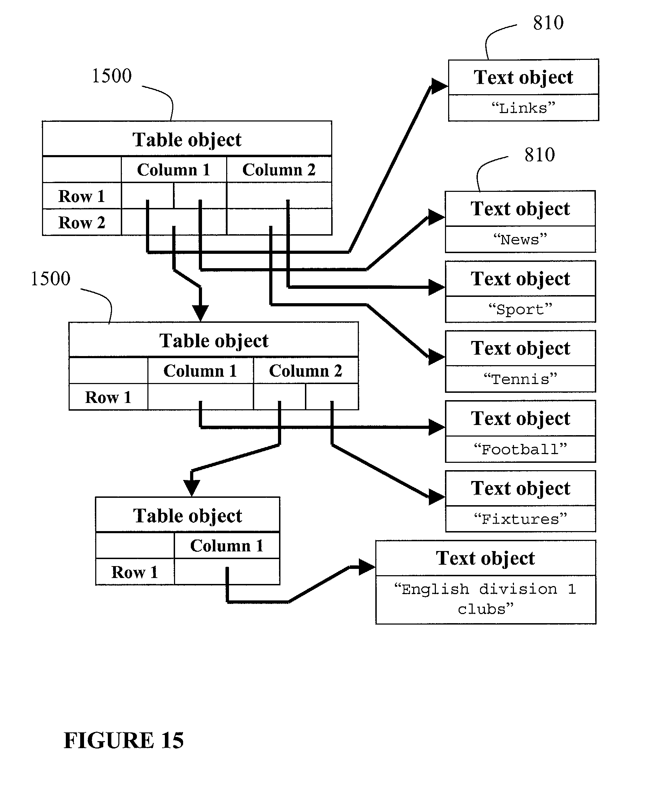

The methods of the Text class 610 provide the following functions:
- Displaying the properties assigned to the Text object on the screen, for debugging purposes.
- Returning the number of Tag objects stored for the Text object.
- Returning a pointer to the Frame object that owns the Text object.
- Returning a pointer to the Table object that directly owns the Text object.
- Searching the Text object's Tag vector, starting from the highest index (like a queue), for the first tag named **<tag_name>.** If one is found, a pointer to it is returned, else **NULL** is returned.
- Returning the Tag object at index **<index>** in the Text object's tag vector. If **<index>** is out-of-bounds, returns **-1.**
- Returning a pointer to the text stored in the Text object.
- Returning the ID of the Text object.
- Returning the Text object's background or foreground colour
- Determining whether this Text object's properties are the same as a given Text object
- Instructing the Text object to assign properties to itself. In property assignment, logic rules assign a set of high-level "properties" (as enumerations defined in GlobalDefs.h) to the text (such as LINKS_ON_SITE or IS_SCRIPT) according to the Text object's set of Tags, and each Tag's set of Attributes. A method **Get_Text_Properties** can be called to do this. Property assignment is discussed in greater detail under the heading **"Object Property Analysis and Assignment"** below.
- Returning **true** if the Text object has the property **<property>,** else returns **false.** The Text_Property type is an enumeration defined in GlobalDefs.h.
- Returning the text's background or foreground colour.
- Determining whether this Text object's properties is the same as a given Text object
- Setting **<frame>** as the new owner frame for the Text object.
- Setting **<table>** as the owner table for the Text object.

### The Tag class 615 -

The Tag class 615 represents an HTML tag and the data it contains. A Tag object contains methods to directly retrieve or search for any Attribute objects contained within it.

The tag object constructors are as follows:
**Tag** (CString* **in_name,** CString* **in_additional_term_tag_name,** int **in_tag_occurance_num)**
**Tag** (CString* **in_name,** int **in_tag_occurance_num)**

These create a new Tag object with name (tag type) **<in_name>** and tag occurance number **<in_tag_occurance_num>.**

A function of embodiments of the present invention is to keep a tally of current tags in order to search for the associated end tags. This is further discussed under the heading **"The "Current Tags" Algorithm"** below. In a newly created tag object, **<in_additional_term_tag_name>** is the name of a tag that, if encountered in the current_tags stack vector in the **Frame::Create_Text_Objects** method, terminates the search for end tags for this tag object.

The methods of the Tag class 615 provide the following functions:
- Adding a new Attribute object to the tag of type (name) **<type>** and with data **<data>**
- Returning the name of the additional terminating tag for the Tag object (see comment above regarding **<in_additional_term_tag_name>**). If there isn't one, returns a pointer to an empty string ("").
- Searching for the attribute name given by **<name>** in the Tag object's list of attributes. If found, returns a pointer to the Attribute object found, otherwise returns **NULL.**
- Returning a pointer to the Attribute at index **<index>** in the Tag object's list of attributes (the first item has index **0).** If **<index>** is out-of-bounds, returns **-1.**
- Returning the name (or *type)* of the tag.
- Returning the number of Attribute objects the Tag object currently has stored.
- Returning the tag's "tag occurrence number". This number is used to differentiate the tag with others of the same type on the same page.
- Returning **true** if the tag has an additional terminating tag, else returns **false.**

### The Attribute class 620 -

The Attribute class is a simple container class used to hold a single tag attribute's name and data.

The attribute object constructors are as follows:
Attribute (CString* **in_type,** CString* **in_data)**
Attribute (CString* **in_type)**

These create a new attribute object of type (name) **<in_type>,** and possibly with data <in_data>.

The methods of the Attribute class 620 provide the following functions:
- Returning type (name) or data of the attribute.

### 4.1.3 TextStructure, Table, Block, Section, Title 1610, 1600, 1620, 1605, 1612

These classes are used in analysing the structure of a Web page so that it can be broken up sensibly for presentation to the user.

### The Table class 1600 -

The Table class 1600 embodies HTML data relating to tables and is relevant to the layout of text objects identified by VoiceWeb 200 in processing a Web page. The HTML table tags *TABLE, TR, TH* and *TD* are almost universally used throughout the Internet. Although originally intended to assist the display of data tables, they are now usually used to define the structure of a Web page. Each part in a page is usually grouped into a table, and each of these parts is often broke into several sub-parts, which are also each grouped into tables. This means that a Web page can often be seen to be a hierarchical structure of nested tables. The way in which HTML tables are used like this can assist in representing Web pages as software objects greatly, as each of these tables can be represented as an object in the OOWRF framework 205.
Figure 14 shows a typical HTML table structure and Figure 15 shows how the framework would represent this structure.

Tables are further discussed under the heading **"Table Structure Representation"** below.

The other classes for analysing the structure of a Web page, Title 1612, Section 1605, Block 1620 and TextStructure 1610, can only be instantiated after analysis by VoiceWeb 200 to identify relative properties of objects in a Web page.

The Table class 1600 stores a hierarchical structure of Text objects, and is a subclass of the TextStructure class 1610. The structure of the Table class 1600 is defined by the HTML table tags (TABLE, TR, TH & TD). A Table is made up of a set of *rows (TR),* each of which contains a set of *columns (TH* / *TD).* Each column contains a set of data objects, which can be either Text or other Tables. Each Page contains one Table, called the master or root table, which represents the entire page. This table contains all other tables within the page.

Each Table object assigns itself a set of *properties* (upon a call to the method **Process_Properties)** by analysing the data within them. The list of possible table properties are listed in the **Table_Properties** enumeration in **GlobalDefs.h.**

The Table class supplies many methods to retrieve objects. Some methods only get **Direct** objects - those that are specifically owned by **this** Table, not by another Table object that is in turn owned by **this** Table.

The Table object constructor is as follows:
Table (int **id**, Table* **in_owner_table**)
This constructs a Table object, with ID **<id>.** The owner of the Table (the Table object that is creating this Table) is given by **<in_owner_table>**. If this is the master table, **<in_owner_table>** must be set to **NULL.**

The methods of the Table class 1600 provide the following functions:
- Adding a new column to the end of the row at index **<row_index>** in the Table. If **<row_index>** is out-of-bounds, returns **false,** else returns **true.**
- Adding the object **<data>** (Table or Text) to the Table at row **<row_index>** and column **<column_index>.** If **<row_index>** or **<col_index>** is out-of-bounds, returns **NULL,** else returns the pointer to the object **(<data>).**
- Adding a new row to the end of the Table.
- Removing any empty tables, rows or columns from the Table.
- Returning whether the Table with table ID **<table_id>** is contained *anywhere* within this Table. A different method, called **"Directly_Contains_Table",** should be used to find out whether the table given is *directly* owned by a table.
- Removing the contents of the Table and replacing them with a copy of references contained within a "source" table.
- Returning whether the Table *directly* owns the table given by **<table_id>.** (A different method is used to check whether the table given is stored *anywhere* within a table.)
- Displaying the Table's contents as a hierarchical list of objects. Text objects are displayed as the text stored within them (if any); Table objects are expanded and their contents are displayed with a larger indent.
- Displaying the entire textual contents of a page in a hierarchical structure. This method is called on the root table.
- Retrieving the data object at row **<row_index>,** column **<column_index>** and at index **<data_index>.** If any of these are out-of-bounds, this method returns NULL. Another method is used to find out what type of object is returned (Table or Text).
- Searching the Table structure for the **<index>**th *directly* contained Table object or Text object. For example, if **<index>** is **3,** the third Table object or Text object that is directly owned by the Table this method is called on will be returned. If **<index>** is out-of-bounds, this method returns **NULL.**
- Returning the ID of the table. Note that IDs can be altered by another method, so they may not stay the same as the value that was given upon construction of the Table object.
- Returning the ID of the first column in the row given by **<row_index>.** A column ID is determined by the Tag ID of the <TD> or <TH> HTML tag that the column represents.
- Returning the ID of the first row in the Table. A row ID is determined by the Tag ID of the <TR> HTML tag that the row represents.
- Returning the ID of the Table as a String. Implements the abstract (virtual) method in TextStructure.
- Returning the *level* of the Table in the Page's Table hierarchy. The root table is at level 0, all tables directly owned by the root table are at level 1, all tables directly owned by these are at level 2, and so on.
- Returning the number of columns in the row at index **<row_index>.**
- Returning the number of Table objects, or Text objects, that are *directly* owned by the Table. Another method can be used to get the numbers of table objects or text objects contained *anywhere* within the Table.
- Returning the number of objects stored in row **<row_index>** and column **<column_index>.**
- Returning the number of rows in the Table.
- Returning the number of Table objects or Text objects stored *anywhere* within the Table. Other methods can be used to get the numbers of Table objects or Text objects *directly* owned by the Table.
- Returning a pointer to the Table object that owns the Table. If this is the root table, this method returns **NULL.**
- Returning a pointer to the TextStructure (which will be a Table) at the top of the Table hierarchy that the Table belongs to. If this is the root table, this method returns **NULL.** Implements the abstract (virtual) method in TextStructure.
- Searching for the Table with ID **<table_id>** within the Table. To search only the objects *directly* within the Table, set **<recursive_search>** to **false.**
- Searching the Table structure for the **<index>**th Table object. The search performed is **depth-first:** whenever a new Table is found, it is immediately searched before the rest of the current Table. The remaining objects in the current Table are searched after the newly found Table object has been completely examined. If the Table object at the index given exists a pointer to it is returned, else **NULL** is returned.
- Searching the Table structure for the **<index>**th Text object. If the Text object at the index given exists a pointer to it is returned, else **NULL** is returned. See the description of the method above for an explanation of the order in which the Table structure is searched.
- Inserting a row into the table before the row at index **<row_index>.** If **<row_index>** is out-of-bounds, returns **false,** else returns **true.**
- Sequentially ordering the IDs of all Tables stored within the Table, starting from the ID of the Table.
- Removing the column in row **<row_index>** at index **<column_index>.** If either of these arguments are out-of-bounds, returns **false,** else returns **true.**
- Removing the object at row **<row_index>** in column **<column_index>** at index **<data_index>.** If any of these arguments are out-of-bounds, returns **false,** else returns **true.**
- Searching the Table's structure for the Table given by **<target_table>.** If found, it is removed and **true** is returned, else **false** is returned.
- Removing the row at **<row_index>.** If **<row_index>** is out-of-bounds, **false** is returned, else **true** is returned.
- Changing the ID of this Table to **<in_table_id>.**
- Setting the ID of the first column in row **<row_index>** to **<id>.** Note that this attribute is supposed to store the tag ID of the <TD> or <TH> HTML tag that the column represents.
- Setting the ID of the first row in the Table to **<id>.** Note that this attribute is supposed to store the tag ID of the <TR> HTML tag that the row represents.
- Changing the owner of the Table to **<table>.**

There are two methods mentioned above which involve searching the Table structure. The order in which Table objects are searched is further discussed below under the heading **"Searching a Table Structure"**.

### The Block class 1620 -

Each Block object is composed of, firstly, zero or more references to Text objects, and then zero or more child Block objects. Block objects are therefore recursive and form a hierarchy, much like tables.

Referring to Figure 7, the Block hierarchy can be formed by analysing the Table hierarchy (see also under the heading "7.1.1 Table Structure Representation " below) and a description of this follows. (Alternative ways of forming a block hierarchy are: creating a new block for every table row; creating a new block for every table row and for every new DIV tag encountered; and creating a new block for every table row and for every new P tag encountered.)

Blocks differ from Tables in that they are simpler - they do not have rows/columns, and they are, before they have been manipulated at least, always of the same format (0-* Texts followed by 0-* Blocks). Besides from their structure, Block objects, due to their simplicity, allow more complex operations to be performed on them: Blocks can be quickly copied, moved or split up.
Because of this, they are much better suited for use in the Section generation process, and can be thought of as an interim stage in this process, i.e: HTML->Frames->Page->Tables->Blocks->Sections.

The constructor for a Block object is as follows:
Block (Block* **owner_block_in)**

The owner of the Block (the Block object that is creating this Block) is given by **<owner_block_in>**. If this is the master block, **<owner_block_in>** must be set to **NULL**.

An example of a set of functions provided by methods of the Block class 1620 is as follows:
- Adding the Block **<block>** to the Block at index **<insertion_index>.** If **<insertion_index>** is not supplied, adds the block to the end of the Block's contents. Returns a pointer to the added Block.
- Adding the Text object **<text>** to the Block at index **<insertion_index>.** If **<insertion_index>** is not supplied, adds the Text object to the end of the Block's contents.
- Adding the object **<object>** to the end of the Block.
- Adding the contents of **<source>** to the Block (i.e. all Text and Block pointers) at *direct* contents index **<insertion_index>** and then deletes **<source>** and removes it from its owner (if it has one). All moved Blocks are set to be children of this block, i.e. their owner block is set to this block. Returns false if no objects were present in **<source>**, else returns true. (This is a "Combine" method, used to combine one block with another, for instance where one is so small as to be best combined with a next or previous one. The "Combine" method is used in the Section Generation algorithm, described under heading "7.3" below.)
- Appending the (direct and indirect) contents of **<source>** to this block, and then recalculating the statistics of this Block.
- Deleting all the Blocks stored in the Block.
- Displaying the direct and indirect contents of the Block.
- Displaying the properties of the block. Property values can be accessed from the methods found in the superclass (TextStructure).
- Returning any of the following given types of object at index **<index>** in the Block's contents: Block, Direct Block, Text Object, Direct Text Object, Object, Direct Object. The *Direct* methods search only those objects directly owned by this Block, the other methods search all objects owned by this Block, its child Blocks, their child Blocks, and so on. The index is specific to the type of object, i.e. direct Block 3 might be different to direct Object 3 (object 3 might be a Text object, or a different Block object).
- Searching the Block structure of the Block's owner (parent), and returning the Block index of itself in the parent's contents.
- Returning the ID of the Block as a string representing the Block index of this and each parent Block. For example, if the Block is its parent's second block, and the parent is it's parent's fourth block, the ID string of this Block would be 4:2.
- Returning the level (ply) of this Block in the root Block hierarchy (e.g. a Block whose grand-parent is the root block is level 2).
- Returning the number of any of the following given types of object stored in the Block's contents: Block, Direct Block, Text Object, Direct Text Object, Object, Direct Object. Direct searches only search this Block's contents, rather than searching the contents of this Block and all of its child Blocks, and their child Blocks, and so on. Searching for objects returns the number of blocks + the number of text objects.
- Returning a pointer to the owner of the Block (the Block's parent). If this is the root Block, returns *NULL.*
- Returning a pointer to the TextStructure (which will be a Block) at the top of the Block hierarchy that this Block belongs to. If this is the root Block, this method returns **NULL.** Implements the abstract (virtual) method in TextStructure.
- Populating this Block using **<start_table>** as the source for the block's contents. Recursively forms a Block structure based on the Table, in the format shown in Figure 7.
- Removing all direct objects from the Block.
- Searching for **<object>** in the Block's direct contents and removing it and returning *true* if found. Otherwise, returns *false*.
- Setting the owner of the Block to **<new_owner>.**
- Attempting to split the Block into 2, inserting the new Block (holding the second half of the existing one) after the existing Block in the parent's contents.
- Flattening the block structure underneath the block after a given level. This means all blocks at the given level in the hierarchy beneath this block are combined into their owner block at the given level.

The indexing of recursive objects in the Block hierarchy is performed in the same way as that of the Block hierarchy, for example:

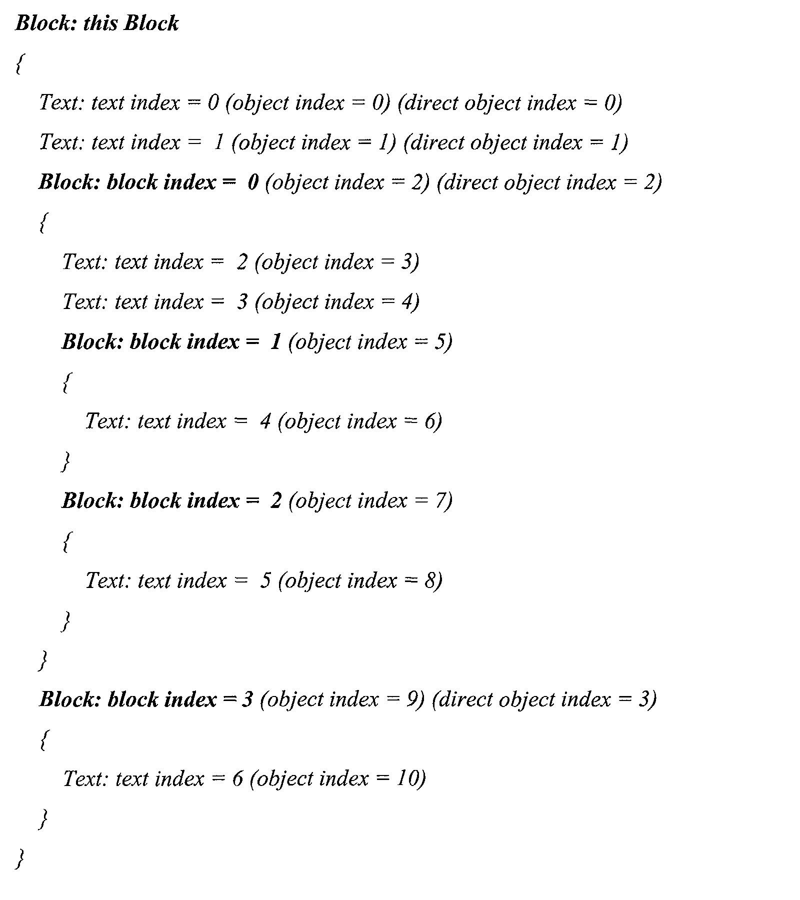

A block is composed of a number of Text objects followed by one or more child Block objects. To split a block into 2, to produce the last method mentioned above, a current Block is split to produce a new Block as follows:
Take the number of direct child blocks (blocks owned directly by the current block). If this is 1 or over, then the division point used for the split is the one where the bodies of text belonging to the Block to be split either side of the division point are the most similar size to each other. Size is determined by the size index statistic in the TextStructure superclass. The Text objects owned directly by the block to be split always form the first part of the first of the two Blocks that result from the split. The division point can be at 0, i.e. use the initial Text in the current Block as the first resultant block from the split as above, and then use all the child Blocks of the Block to be split as the other resultant Block of the split. To serve as an example: if the division point is 1, then the initial set of owned text objects and the first Block in the Block to be split are put in the first resultant Block of the split, and the other Blocks owned by the Block to be split are used for the second resultant Block of the split. If the block to be split contains 1 child block but no Text objects, then the split algorithm is applied to the child block. If the number of direct child blocks (blocks owned directly by the current block), is 0, the current block cannot be split.

In order for any split to be made, both potential Blocks must be larger than **<min_block_size>** (size represents the value of TextStructure::size_index). Returns false if no split can be made, else returns true.

### The Section class 1605 -

The *Section* class 1605 is used to represent one part of a Web page. A section can be any size, but ideally the number of sections a page is composed of should be a function of its size and complexity. Size is calculated according to statistics: primarily the total number of characters on the page is analysed. Complexity is determined by the number of tables and/or blocks it is composed of.

The most important aspect of section generation is determining the point at which one section is separated from the next. This point is determined by using the table hierarchy of the page and assigning relative properties to tables which are based on analysis of the whole Web page.

A Section object is a TextStructure object that contains a set of references to Text objects that collectively represent a specific part of a Web page. Section objects can also be used to store a list of Table objects. Page objects generate a set of Sections in an attempt to sensibly split up the contents of a Web page.

The constructor for the Section object simply creates an empty Section object.

The methods of the Section class 1605 provide the following functions:
- adding a given Text object to the section
- adding a given TextStructure to the section
- removing the TextStructure at a given index
- getting the number of Text objects
- getting the number of TextStructure objects
- getting the Text object at a given index
- getting the TextStructure at a given index
- displaying the properties of the Section
- getting the ID of the Section
- setting the ID of the Section to a given number

### The Title class 1612 -

The Title class stores references to a set of Text objects that represent a potential full or partial title for a TextStructure. Each title has a set of reasons associated with it which dictate why the Text objects stored within it are thought to be important. Title objects are not necessarily used as the title for anything, they are used to represent the ways in which a set of Text objects are important in relation to their peers in their specific TextStructure. The best of these can then be selected for use as an actual title which might for instance be spoken to the user in describing part of a page.

The constructor for the Title object simply creates an empty Title object. "Title (Title* source)" can construct a copy of the Title object given by <source>.

The Title object has a static method which checks whether the string <title> is valid, for example whether it has enough letters and is not an unsuitable phrase such as "click here" or "go to top".

An example of a set of functions provided by further methods of the Title class 1612 is as follows:
- Adding a set of "title reason" enumerations to the Title object (enumerations defined in GlobalDefs.h).
- Adding a Text object to the Title.
- Returning the TextStructure object that the Title has been associated with.
- Returning the number of Text objects in the Title.
- Returning a pointer to the set of "title reasons" associated with the Title object.
- Returning a pointer to the Text object at a selected index in the Title's set of Text objects.
- Returning a CString containing the text of each Text object associated with the Title.
- Returning true if the Title object has a reason stored as one of its associated "title reasons", else returns false.
- Comparing the set of title_reasons in the Title object to those in another Title object given by <other_title>. If they are identical, returns true, else returns false.
- Setting the TextStructure object that the text in this title is associated with to <structure_in>.

### The TextStructure class 1610 -

The key types of property assigned to a table are its type, size, and importance. In order to assess these qualities, statistics concerning the whole Web page need to be collated. The *TextStructure* class 1610 is used to contain these statistics, and *Tables*, *Blocks* and *Sections* inherit this class. The full set of statistics stored can be seen under the Heading **"TextStructure Statistics"** below.

The TextStructure class is designed as an abstract framework for a structured collection of Text objects, with properties related to these collective Text objects. The class is not designed to be instantiated but is inherited by the Table, Block and Section classes. It contains some methods, which perform the following functions:
- determine whether the TextStructure has a given property, given as an enumeration which is defined in the global definition header file.
- get the number of properties assigned to the TextStructure
- get the property at a given index in the TextStructure
- display the list of properties assigned to the TextStructure
- request the TextStructure to calculate and process its statistics, properties, and titles, which are all dependent on the text and the properties of the Text objects owned by the TextStructure, as well as information about the structure itself, such as the number of structures is composed of.
- request the TextStructure to calculate just its statistics.
- get the title at a given index.
- get the number of possible titles stored for this TextStructure.
- request the TextStructure to recalculate its size index, which is much quicker than getting all statistics if the size index is all that is required.

The TextStructure superclass also has some abstract methods, listed as follows:
CString* Get_Id_String **()**
int Get_Num_Text_Objects **()**
TextStructure* Get_Root_Text_Structure **()**
Text* Get_Text_Object_At_Index (int **index**)
CString* Get_Title **()**

### 4.1.4 DefFileReader 1630

This is a simple low-level class used to help read OOWRF .def files

### The DefFileReader class 1630 -

This class is not designed to be instantiated. It is inherited by the TagDefFile, CharDefFile and CSSDefFile classes and contains methods which simplify the retrieval of data from the OOWRF .def files. These methods provide the following functions:
- Closing the file. This method should always be called once retrieval of data from the file is complete.
- Getting the next line from the file, and placing it as a CString object in the protected attribute **line**. If the line is empty, the attribute **line** is set to " ", and the protected Boolean attribute **is_empty** is set to **true,** otherwise it is set to **false.**
- Opening the file with filename **<in_filename>.** If the file cannot be opened after several tries, an **exit(-1)** call is made.

### 4.1.5 CharDefFile, CharDef 1615, 1645

Classes to read and store the data in the Character Definition File (*CharDeft*.*def*)

### The CharDefFile class 1615 -

A CharDefFile object reads and stores all information in the CharDefs.def file. This file stores mappings for special characters (such as "&nsbc;" or "„"). The file contains information about how to amend these mappings. Any special characters encountered are converted by the Text class to their mapped *replace_symbol* value.

When a CharDefFile object is constructed, using the constructor "CharDefFile ()", it causes the CharDefs.def file to be opened and parsed. The data in the file is automatically stored in a vector of CharDef objects.

A CharDefFile object has methods which provide the following functions:
- Searching for a CharDef with a value of the *named_value* equal to **<name>.** If one is found a pointer to the object is returned, otherwise **NULL** is returned.
- Searching for a CharDef with a value of the *numeric_value* equal to **<name>.** If one is found a pointer to the object is returned, otherwise **NULL** is returned.

### The CharDef class 1645 -

CharDef is a simple container class used to store the data from one entry in the CharDefs.def file. It is constructed using the following constructor:
CharDef (CString* **in_numeric_value,** CString* **in_named_value,** CString* **in_symbol,** CString* **in_replace_symbol,** CString* **in_description**)
This constructs a CharDef object with the data from an entry in the CharDefs.def file. The object has methods which will return the following specific pieces of data:
   - Description **()**
   - Named_Value **()**
   - Numeric_Value **()**
   - Replace_Symbol **()**
   - Symbol **()**

### 4.1.6 TagDefFile, TagDef 1635, 1650

Classes to read and store the data in the Tag Definition File (*TagDefs*.*def*)

### The TagDefFile class 1635 -

A TagDefFile object reads and stores all information in the *TagDefs.def* file. This file stores information about each type of HTML tag. The information is stored as a set of TagDef objects
- one for each tag. If a tag is encountered by the HTML parser in the Frame class 605 that is not defined in the *TagDefs.def* file, it is ignored. The *TagDefs.def* file is important as it tells the parser how to act when it encounters the tags in an HTML page; if the information in the file is incorrect, the representation of the Web page provided by the OOWRF 205 will be distorted.

A TagDefFile object is constructed using the constructor "TagDefFile ()". This causes the TagDefs.def file to be opened and parsed. The data in the file is automatically stored in a vector of TagDef objects.

A TagDefFile object has methods which provide the following functions:
- Searching for a TagDef with tag name **<name>.** If one is found a pointer to the object is returned, otherwise **NULL** is returned.
- Returning the TagDef object at index **<index>** in the TagDef vector. If **<index>** is out-of-bounds, then **NULL** is returned.

### The TagDef class 1650 -

TagDef is a simple container class used to store the data from one entry in a TagDefs.def file. A TagDef object is created using the constructor:
TagDef (CString* **tag_name_in,** Tag_Action **action_in,** CString* **replace_text_in,** CStringArray* **additional_end_tags_in,** CString* **additional_end_tags_search_termination_tag_in)**
This constructs a Tag object with the data from an entry in the TagDefs.def file. It has methods which perform the following functions:
   - Returning and resetting the value of the occurrence counter for this type of tag.
   - Returning the following specific pieces of data:
      - Tag_Name **()**
      - Action **()**
      - Replace_Text **()**
      - Additional_End_Tags **()**
      - Additional_End Tags_Search Termination_Tag **()**

### 4.1.7 CSSDefFile, CSSPropertyDef, CSSDataDef 1640, 1655, 1660

Classes to read and store the data in the CSS1 Style Sheet Definition File (*CSSDefs*.*def*)

### The CSSDefFile class 1640 -

The CSSDefFile class represents the contents of the *CSSDefs*.*def* file (CSS1 style sheet mappings). It stores the file as a set of CSSPropertyDef objects, which each represent a set of data->tag mappings for one CSS *property* in the file.

A CSSDefFile object is created using the constructor **CSSDefFile ()**. Upon construction, a CSSDefs.def file is opened and read (using the inherited DefFileReader class), and the set of CSSPropertyDef objects used to represent the file are created and stored. The data->tag mappings for each property in the file are added to their corresponding CSSPropertyDef object as CSSDataDef objects.

A CSSDefFile object has just one method which searches for a CSSPropertyDef object with the property name given by **<property_name>**. If found, it is returned, else **NULL** is returned.

### The CSSPropertyDef class 1655 -

A CSSPropertyDef object contains one set of data->tag mappings for a property from the *CSSDefs.def* file. It is created using the constructor "CSSPropertyDef (CString* **in_name**)" with property name **<in_name>.**

A CSSPropertyDef object has methods which provide the following functions:
- Adding a new CSSDataDef object to the CSSPropertyDef object with data item name **<in_name>.**
- Returning the name of the property this CSSPropertyDef object represents.
- Searching for a CSSDataDef object with data name **<name>.** If one is found, it is returned, else **NULL** is returned.
   Concerning the first function listed, the equivalent tag name that the data item is mapped to is given by **<tag_name>.** The attribute name to use with this tag is given by **<tag_attribute_name>,** and its data is given by **<tag_attribute_data>.** These should be empty strings ("") if an attribute is not to be used with the tag. The argument **<tag_action>** defines whether to add the mapped tag to the **current_tags** vector whenever the style definition is used, or whether to remove the first occurrence of the tag found in the vector.

### The CSSDataDef class 1660 -

The CSSDataDef object stores one CSS Property data -> HTML Tag mapping from the *CSSDefs*.*def* file. It can be created using the constructor:
CSSDataDef (CString* **in_name,** CString* **tag_name,** CString* **tag_attribute_name,** CString* **tag_attribute_data,** CSS_Tag_Action **in_tag_action)**

This constructs a CSSDataDef object with data item name **<in_name>.** The equivalent tag name that this data item is mapped to is given by **<tag_name>.** The attribute name to use with this tag is given by **<tag_attribute_name>,** and its data is given by **<tag_attribute_data>.** These should be empty strings ("") if an attribute is not to be used with the tag. The argument **<tag_action>** defines whether to add the mapped tag to the **current_tags** vector whenever the style definition is used, or whether to remove the first occurrence of the tag found in the vector.

A CSSDataDef object has methods which provide the following functions:
- Displaying the currently processed sections. Shows each section's title, text objects, and tables. No return value.
- Returning the data stored within the object, particularly the following:
   - Equivalent_Tag **()**
   - Name **()**
   - Tag_Action **()**

### 4.1.8 StyleSheetParser 1665

Class to parse basic CSS1 style sheets.

### The StyleSheetParser class 1665 -

This class stores the definitions contained in the style sheet in the TagBindDefContainer and ClassDefContainer objects given to it upon construction.

A StyleSheetParser object has a method which analyses the style sheet given by the string **<style_source>** to produce a set of StyleProperty objects and stores them in the ClassDefContainer and TagBindDefContainer objects given by **<in_class_defs>** and **<in_tag_bind_defs>.**

### 4.1.9 StylePropertyContainer, ClassDefContainer, TagBindDefContainer, StyleProperty 1675, 1685, 1670, 1680

These classes store the style information for a page.

### The StylePropertyContainer class 1675 -

An object that inherits the StylePropertyContainer class 1675 stores a set of StyleProperties objects and contains methods to add and retrieve them.

The StylePropertyContainer class 1675 is not designed to be constructed: it is inherited by the TagBindDefContainer and ClassDefContainer classes (although these do not alter the functionality in any way; they are used simply for naming conventions). It has methods which provide the following functions:
- Adding a new StyleProperty object with name **<name>** (either the name of the tag this applies to, or a new style sheet **class** name). The **<type>** argument is a property name, and **<data>** is the data for this property.
- Retrieving the StyleProperty object at index **<index>** in the storage vector. If **<index>** is out-of-bounds, **NULL** is returned.
- Retrieving the set of StyleProperty objects with a property with name **<property_name>.** Stores the indexes of the matching objects in the integer vector object **<matching_indexes>.** Returns the number of matching objects found.
- Returning the total number of StyleProperties stored in this object.

### The ClassDefContainer class 1685 -

The ClassDefContainer class 1685 simply inherits the StylePropertyContainer class 1675. It does not add any additional functionality, and is present for usability (class naming) reasons only. It is used to store style sheet class definitions (as StyleProperty objects), as opposed to style sheet tag bind definitions, which are stored by objects of the TagBindDefContainer class.

Objects are created using the constructor "ClassDefContainer (CSSDefFile* **in_def_file)**". The argument **<in_def_file>** points to the CSSDefFile object.

This class contains no additional methods. All methods are inherited from the StylePropertyContainer class 1675.

### The TagBindDefContainer class 1670 -

This class 1670 simply inherits the StylePropertyContainer class 1675. It does not add any functionality and is present for usability (class naming) reasons only. It is used to store style sheet tag bind definitions (as StyleProperty objects), as opposed to style sheet class definitions, which are stored by objects of the ClassDefContainer class.

Objects in the TagBindDefContainer class 1670 are created using the constructor "TagBindDefContainer (CSSDefFile* **in_def_file**)". The argument **<in_def_file>** points to the CSSDefFile object.

### The StyleProperty class 1680 -

A StyleProperty object stores one style property (either a tag bind definition or a class definition). Style properties are declared in a Web page's style sheet definition section, and found and created by the StyleSheetParser class.

A StyleProperty object is created using the constructor "StyleProperty (CString* **in_name,** CString* **in type,** CString* **in_data,** CSSDefFile* **def_file**)". This constructs with name **<in_name>** (either the name of the tag this applies to, or a style sheet **class** name). The **<type>** argument is a property name, and **<data>** is the data for this property. The argument **<def_file>** is a pointer to the CSSDefFile object. The CSS1 definition file is used to get an equivalent HTML tag to use for this particular property/data combination.

A StyleProperty object has methods to retrieve pieces of data, such as the following:
- Name **()**
- Type **()**
- Data **()**
- Equivalent_Tag **()**
- Tag_Action **()**

### 5. The speech interface 210

The speech interface 210 must support the navigation of Web pages as described above with reference to Figure 3a. In order to do that, it must be able to identify the user and to look up personalised or customised information, such as the list of start pages for that user and any grammar which might be relevant for instance in identifying section types to the user, in receiving selections from the user, or in receiving entries for document fields from the user.

The speech interface 210 uses a grammar-based natural language system for speech recognition at each state in the dialogue flow between user and system. A grammar is the body of words and phrases which must be understood by the system in relation to a particular situation, such as interaction with a selected user in relation to a selected document. Grammars can be generated dynamically from data from the customisation profile of a page, stored as configured page data 235. (A customisation grammar might have been loaded by a user or by a system administrator and therefore might be personalised for a particular user or customised for all users of the system.) These grammars are then used to allow the system to understand names the user or administrator may have assigned to parts of the page. Alternatively, the grammar might be a general grammar accessible by the system or generated by it and stored as OOWRF supporting data 230 in the system database 105.

Information such as the following might be included in a customisation profile, as discussed with reference to Figure 3b:
- a label for a Web page
- the number of sections the page is divided into (although can also be set to "automatic")
- the title for each section in a section profile for a page, where a section profile is the list of sections which represent a page.

Natural language interfaces are known and the technology of the interface itself in terms of speech recognition and/or text-to-speech processes is not described herein. Relevant products based on grammars are available for instance from Nuance Communications. However, there are one or two aspects of behaviour of the speech interface 210 which are special to an embodiment of the present invention and these are further described below.

General grammars for the speech interface 210 can be designed to produce initially a "skeleton" grammar of commands available to the user. A known natural language tool, such as "nl-tool" provided by Nuance Communications can then be used to gradually test and improve the grammar. This tool attempts to parse typed sentences using the current grammar files and returns whether the sentence is valid. Additional options are added to the grammar as more suitable sentences are found that represent each system command.

The dialogue for the speech interface 210 incorporates the following special features to improve usability:
- Specific help at any time for each of the dialogue states. The user is always returned to the same state once the help has been played.
- The ability to return to previous states at any time. For instance, if a section of a page is being read, the user may ask to read an entirely different page from his/her list of start pages.
- Error recovery. If the user says something that isn't understood, the system informs him/her and repeats the question. If this occurs on five consecutive occasions, the system apologises and rejects the user, as there may be an internal error.

### The way these features are provided is as follows:

***Help:*** a "help" sub-grammar is part of every top-level grammar, i.e. the user can always use the same words get help at any point. The "help" command must therefore be recognized and catered for at each dialogue menu (each point in the code where a question is posed to the user), and a help prompt (message) must be recorded for each of these menus.
***Return:*** same as above; a "change page" sub-grammar exists for each top-level grammar.
***Errors:*** a generic error prompt is played to the user, and an error counter specific to the menu is incremented. If the counter reaches 5, an additional error prompt is played and the system hangs up.

It is important that the speech interface 210 can track its own speech as it is being said, and simultaneously listen out for any input from the user. Tracking is necessary for the system to know the last link that had been read out, for use particularly when the system needs to start reading from where it left off after a user interruption, such as a request for help.

The following is a list of tasks and constraints that need to be supported by the speech interface 210:
- A continuous speech recognition process 210a must be taking place to listen for user input.
- The recognition function 210a must be blocking in at least some circumstances, particularly during dialogue. That is, the recognition process 210a must sometimes be able to halt execution of VoiceWeb 200 until user input occurs.
- VoiceWeb dialogue needs to be read out to the user 300
- The textual contents of a Web page must be read out to the user 300. This and the previous task can be done by using available text to speech technology such as the Microsoft product "Microsoft Speech SDK".
- The text to be spoken must be sent to the speech synthesiser in small parts so that the system will know which part has been read most recently.
- The recognition and speech synthesis processes 210a, 705 must be able to communicate in order to co-ordinate when to speak, when to listen, and what to read.
- A pause occurs between when the speech synthesiser stops reading one block of text sent to it and when it starts reading the next and the system must ensure that the pause occurs in positions in the text which sound natural to the user 300.

In order to solve the problem of the pause in between speech outputs, it is preferable that the text to be spoken is separated into logical sentences by the VoiceWeb application. This can be done by analysing the sequence of characters in the text and splitting it up when certain sets of characters were found (such as a dot followed by a space; a full-stop).

The general arrangement is that all communications from VoiceWeb 200 to the user 300 are spoken and go via the speech synthesiser 705. All communications from the user 300 to VoiceWeb 200 are received via the speech recognition process 210a. (In practice, this is not necessarily the case, as mentioned elsewhere, but it is shown here for simplicity.) The communications from VoiceWeb to the user 300 include both prepared dialogue, and sentences in respect of Web pages. The sentences in respect of Web pages will include descriptions of a Web page, prepared after analysis of the Web page by VoiceWeb, and text from the Web page.

The process that takes place when recognising whilst reading the text from a Web page is as follows:
1) Calculate sentence breaks in the Web page text, for instance from the punctuation.
2) Add each sentence separately to an area in memory designated to store the set of sentences (a "vector").
3) With each of these sentences, also store whether they are links and if so what the URL they link to is.
4) Start background recognition process (that is, listen for user speech or key presses).
5) Start playing sentences, keeping track of which one is being played. If it's a link, then first play a sound to indicate this. Filter the text before it is played, converting any characters or words that might cause the speech synthesiser problems.
6) If user input occurs, act accordingly based on what they said and which sentence was most recently played.
7) If necessary, re-start background recognition process and re-start reading sentences from the point at which reading stopped.

### 6. Converting a Simple HTML page to an OO Framework

The following covers the fetching of a page from the Internet, and the analysis of its HTML code to create software objects that represent the page. The fetched page will usually consist of more than one frame. Each frame typically contains hundreds of text objects, each text object contains several tags and each tag often in turn contains a set of attributes. Objects are created to represent each of these.

The primary tasks required are as follows:
- Retrieve the page from the Internet including any integral frames
- Convert special character codes to their representative characters
- Scan through the page and create text objects (each with a set of *Tag* objects)

Referring to Figure 8, a UML (Unified Modelling Language) sequence diagram shows how the objects involved in the representation of a page are created in a typical scenario.

### 6.1 Retrieving a page

To fetch a page at a given URL such as "www.mypage.com", an object 800 of the Page class 600 creates an object 805 of the Frame class 605 which retrieves the page at that URL. This first task is fairly simple: Microsoft code from the MFC (Microsoft Foundation Class) library can be used.

### 6.2 Creating Text, Tag and Attribute objects

The Frame object 805 scans the retrieved page to detect each piece of text with its associated tags and creates an object 810 of the Text class 610 for each piece of text. The Text objects 810 in turn create an object 815 of the Tag class 615 for each of their associated tags. Two are shown in Figure 8, a Tag object 815 for the property "HTML" and a Tag object 816 for the property "Font". There is no attribute associated with the "HTML" Tag object 815 but the Text object 810 will detect the attribute "SIZE" for the "Font" Tag object 816 and will call on the "Font" Tag object 816 to create an Attribute object 820 to store the value "5".

### 6.2.1 The "Current Tags" Algorithm

In order for the Frame object 805 to create Text objects 810, it has to keep track of the tags that apply to each character in the HTML source code for the relevant frame. This is done using a "current tags" algorithm. An object vector stores the set of Tag objects 815, 816 that are active at each point in the source code. As the *Create_Text_Objects* method passes through the code, one character at a time from start to end, Tag objects are created and added to the top of this vector when each new opening tag is found in the code. When a closing tag is found, the matching Tag object is removed from the "current tags" vector and deleted from memory, as it no longer has any effect on any subsequent entities in the Web page.

The algorithm in practice is complex because it needs to keep track of the properties that apply to the position in the source code that it is looking at. It does this by continuously updating a set of *flags*:
- Inside a comment block (<!--> </-->)?
- Inside a quote block (" ")?
- Inside a script block (<SCRIPT> </SCRIPT>)?

Different actions are taken depending on the state of these flags. Other flags monitor whether the current character is part of a tag, an attribute, a piece of text, and so on.

A complication is that tags can be closed in more than one way. It is not always necessary to close a tag block with a closing tag of the same type. Sometimes, tag blocks can be closed by closing tags of a different type to their opening tag, and even by *opening tags* of a different type. Also, a single tag can close more than one tag block, so every time a tag is found the "current tags" vector needs to be searched to find all the tags that should be removed. When doing this, the system could end up removing every tag of a certain type when only one or two of them should be removed. To stop this, a specific type of tag can be elected to terminate the search if and when it is found while scanning through the "current tags" vector. This tag is called the "search terminator tag".

Figure 10 shows the tag blocks 1000 in a sample section of HTML source code. Note that often end tags are not used to close the tag blocks. For example, the first TD tag block is explicitly terminated by a "</TD>" tag but the next two TD tag blocks are closed by the proceeding <TD> or <TR> tags. (The HTML standard maintained by the W3 Consortium no longer includes code of this type but in practice the code is still used and conventional browsers display it perfectly.)

Figure 11 shows a table 1100 that defines tags that have the ability to close each of the types of tag block 1000 shown in Figure 10. The table is stored in the TagDefs.def file. Any of the tag names in a tag's "terminating tags" section 1105 will close a block opened by that tag 1110. Search termination tags 1115 are those tags that will stop the search for tag blocks to close if found in the vector of active tags. The TABLE tag is in this row so that no tag blocks from previously declared active tables are closed, only tag blocks from the current table.

By using these definitions, it is possible to define the ways in which each type of tag block can be closed. The *TagDefs.def* file can contain definitions like those above for every type of tag recognized by VoiceWeb 200. It can also define other properties, such as whether to ignore a tag, replace it with a given string of text, or store it immediately in an empty text object (for when the tag is supposed to declare something instead of opening a tag block). The *TagDefFile* class 1635 is used to read the file and store a set of objects of the *TagDef* class 1650 which each store the definitions for one tag. By fetching the *TagDef* object for each tag found and checking the definitions it stores, the "current tags" algorithm can reliably keep track of the active set of tags throughout the HTML source code file.

### 6.2.2 Text Object Creation

While the HTML source code is being scanned, the "current tags" algorithm updates flags that represent the properties of the character being looked at. One of these flags is set when the character is part of a piece of text in the HTML code. Each character in the piece of text is added to a string when it is scanned. When the algorithm reaches the end of the text, it creates a new *Text* object 810 to contain the string. It assigns the new Text object 810 the set of tags stored at that exact time in the "current tags" vector. The Text object 810 then calculates a set of properties for itself based on the tags it is created with. Property assignment is discussed below under the heading **"Object Property Analysis and Assignment"**.

### 6.3 Converting special character codes

This is achieved by the creation and use of the *CharDefs*.*def* file. The *CharDefFile* class 1615 is used to represent the contents of this file as a set of objects of the *CharDef* class 1645. The contents of each text object are automatically scanned upon creation for special character codes. These can be a *named entity* (for example "&nsbc;") or a *numbered* entity (for example ""). If a string matching the format of either of these is found, the *CharDefFile* class 1615 is instructed to search for a matching *CharDef* object. If one is found, its representative character given by the *CharDef* object replaces the character code in the text object.

Figure 9 shows a UML sequence diagram to illustrate how the objects of the relevant classes interact in a typical scenario. A Frame object 805 creates a new Text object 810. On creation, the relevant text is scanned for a string matching the format of a named or numbered entity. If such a string is found, an object 9005 of the *CharDefFile* class 1615 is instructed to search for a matching *CharDef* object. If one is found, the CharDefFile object 9005 returns a pointer for the correct *CharDef* object 9000 to the Text object 810 which can then substitute the character from the *CharDef* object 9000, for instance a trade mark symbol, for the string in the text.

### 6.4 Retrieving integral frames

To fetch the page's integral frames, the Page object 800 searches for "FRAME" tag objects with an "SRC" (source) attribute. This will contain the URL to a new frame, which is used to create a new Frame object 805 that will retrieve the page at that URL. Each newly retrieved page will be processed as described above.

### 6.5 Processing Style Sheets

Style sheets contain information about how a page is displayed on-screen and thus can provide information about the size and formatting of text. Such information is fundamental in calculating the importance of blocks of text and can add much to the usability of the voice interface 200 in identifying key areas of a Web page. It can therefore be important to process style sheets in order to extract this information.

There are several formats of style sheet but by far the most popular is the level one cascading style sheet, or CSS1. CSS1 style sheet declarations assign a set of specialised property and data attributes to either a particular tag type or a user defined "class". Whenever one of these tags or classes is used subsequently in the HTML page, the style sheet attributes assigned to it are applied to the text it encompasses.

To deal with this in the VoiceWeb system 200, style sheet data is converted to an equivalent Tag object, and this tag can then be added wherever the style is used. To implement this system, another definition file is used, called *CSSDefs*.*def*. This file stores a set of mappings, each from a supported style sheet property's data item to a Tag object. In the file, all supported style sheet properties are listed, and beneath each of these is a list of the data items that can be used with the property (a wildcard character (*) can be used in order to represent groups of data). Next to each of these data items is the tag name to be used to represent it, and possibly also a tag attribute and its data. There are over 50 properties specified under CSS1, but only those that are important to the effective functioning of the VoiceWeb system 200 need to be defined in the file.

The contents of the style sheet definition file are stored in an object of the *CSSDefFile* class 1640 which contains a set of objects of the *CSSPropertyDef* class 1655. Each of these contains a set of objects of the *CSSDataDef* class 1660, which each in turn contain a mapping to an equivalent tag for the data item. Style sheets declarations themselves are stored in two classes: *ClassDefContainer* 1685 and *TagBindDefContainer* 1670, both of which are simply empty subclasses of the *StylePropertyContainer* class 1675 (they do not add any additional functionality). An object of the *StylePropertyContainer* class 1675 is designed to contain a set of objects of the *StyleProperty* class 1680, each of which represents either a user-defined *class* style definition, or a *tag* style definition.

When a style is used, either by using a tag that has a style associated with it, or as a CLASS attribute with a user-defined class name as its data, the equivalent tag for that style data is fetched from the corresponding CSSDataDef object and added to the vector of current (active) tags.

Figure 12 shows a sample style sheet 1200. The first four lines bind style definitions to certain tag types and the last line declares a user-defined style definition, identifiable because it starts with a dot. The formatting of style sheets is often irregular in a similar way to that of the one shown here.

Before style sheet data can be used as described above, the relevant style sheet information has to be fetched and parsed. Style sheet information can be fetched from an external file at a specified URL, from a specially defined part of the HTML code for a specific document, or from a string specific to one tag block of the HTML code. Once style sheet information is fetched, it is parsed - the string containing the style sheet is analysed and split up into its semantic components, which are the pieces of data that need to be extracted from it. To do this, the syntax of supported style sheets must be defined. The precise CSS1 grammar is publicly available from the W3 Consortium.

Figure 13 shows a sequence diagram of the way in which objects are created to represent the style sheet 1200 of Figure 12, once it has been fetched and parsed by an object of the StyleSheetParser class 1665. Once the objects have been created, a Frame object 805 can then search objects of the TagBindDefContainer and ClassDefContainer classes 1670, 1685 for style mappings to tags and user classes as it analyses a Web page.

### 7. Page Structure Representation

In what has primarily been described above, Web pages are represented simply as a list of Text objects 810 stored by the Frame object 805 that owns them. Although this is useful in its own right, it fails to convey any representation of the structure of the Web page as it would appear if viewed on a conventional browser. In order for the voice interface 210 to read a summary of a Web page, it must know something about this visual structure. To enable this, Table, Block and Section classes are included in the framework 205.

In general, tables are determined by the table tags in the markup code of an HTML page, blocks are generated by analysing the table structure and sections are built from blocks to create a required number of sections for presentation to the user. A new block is initially generated to represent each table on the page. They are generated in such a way that they consist firstly of a set of zero or more Text objects, and then zero or more Block objects that represent additional tables (or any text that appears in the table after any child tables). These blocks are split up (depending on the algorithm used) at each table row, and then possibly at either each new <P> tag or each new <DIV> tag. The blocks structure then undergoes manipulation in order to generate sections, based on a) the relative properties of the contents of the blocks and the blocks themselves, and b) any configuration information stored in the database for the page.

Each of the Table, Block and Section classes is further described below under the headings "7.1.1" through to "7.3".

It might be noted that some general principles relevant to analysing the page structure are:
- the size of tables is used to determine how many are used in each section
- large tables may be split up between sections
- the section assignment algorithm can be interchanged at will without changing anything else
- multiple algorithms can be present in the code with a variable defining which is to be used.

### 7.1.1 Table Structure Representation

The following is a list of starting tags and ending tags, and the related tag descriptions, for a hierarchical representation of a table structure:
<TABLE>, </TABLE>, "Containers for borderless table"
<TABLE BORDER>, </TABLE>, "Tag pair for table with borders"
<TR>, </TR>, "Establishes a row within a table"
<TD>, </TD>, "Defines a cell within a table"
<TH>, </TH>, "Centres a heading at a table's top or side"
<CAPTION>, </CAPTION>, "Places a title at the top of the table"

The title of a table, such as "HTML Table Tags", is a part of the table, as is everything else contained within the <TABLE> ... </TABLE> tags. The data contents of each cell is included between the <TD> ... </TD> pair. Only textual data has been used in table shown above but graphics can also be used, to create special effects. The <TR> ... </TR> pair defines rows. The <TH> ... </TH> tag pair defines heading elements while the <CAPTION> ... </CAPTION> centres a top title.

Normal textual tags, such as <BR>, <P>, or the <B>....</B> pair may be used within the individual cells. Each table cell may be looked upon as its own HTML document, opening up many areas for creative expression.

Figure 14 shows a sample piece of HTML code showing how table tags are commonly used.

Figure 15 is an object reference map showing how the structure of the Web page code from Figure 14 can be represented as a set of object pointers. Rows and their columns are represented as vectors of pointers. Each item in a column vector is an object pointer that references either text objects 810 or other table objects 1500. Since text objects 810 are only ever referenced, not copied, a table structure uses very little memory and can be created very quickly.

### 7.1.2 Searching a Table Structure

Because each table is an object 1500, each part of the hierarchy can be given the ability to search its own contents. Sometimes, a client of the *Table* class 1600 may wish to search for a Text object 810 directly owned by the table object 1500; on other occasions, a client may wish to search every Table that appears under a specific Table object in the hierarchy. To accommodate this, a depth-first, recursive method is adopted to search a Table object's contents:
- Set *N* to be a list of initial nodes.
- If *N* is empty, then exit and signal failure.
- Set *n* to be the first node in *N,* and remove *n* from *N.*
- If *n* is a goal node, then exit and signal success.
- Otherwise, add the children of *n* to the front of *N* and return to step 2.

Searches are done in this way primarily to allow a client to view the contents of a Table object 1500 as a simple sequence of Text objects 810. For example, a client might call the method *Get_Num_Text_Objects()* on a Table object 1500 to retrieve the number of different Text objects 810 referenced by the collective members of the Table object 1500. The client might then call *Get_Text_Object_At_Index(**x**)* in a loop to retrieve each Text object 810 owned by the Table object 1500 in the correct order.

The possibility of memory stack overflow (a problem with the depth-first algorithm) is nullified by the inability to declare the huge number of nested HTML tables that would be needed for this error to occur.

Each object type (be it text or table) is polymorphisised to the generic C++ *CObject* type when its reference is stored in one of a Table object's vectors. During a search, each object found is classified using the *CObject::IsKindOf* method. Upon encountering a specific type of object, an action is taken which depends on the specific search request being carried out. Many searches involve the passing of status indicators to objects as they are searched, and all involve the passing of the search target attribute.

There are many conceivable functions that could be performed by a Table object 1500. The *Table* class 1600 contains by far the most methods of any class in the framework 205.

The following table hierarchy demonstrates the order in which Table objects are searched.

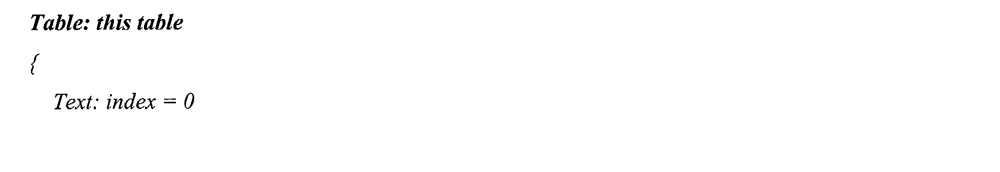

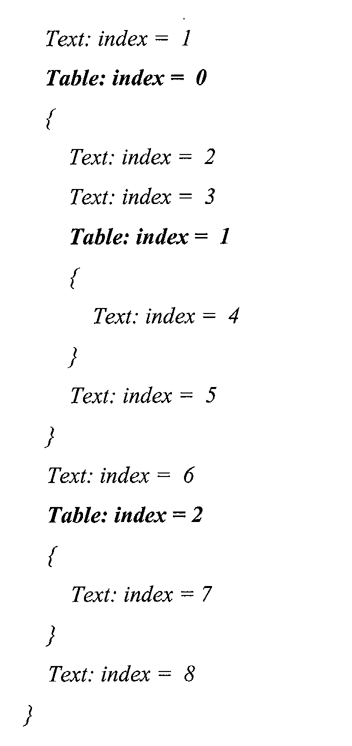

### 7.2 Block Formation Algorithms

The Block structure is recursive in the same manner as Tables. Each block can contain one or more other blocks, which are called its "child" blocks. Parent blocks are sometimes called "owner blocks". The block formation algorithm can be found in the Block: :Populate_Block(Table *start_table*) method. Therefore each block populates itself using the Table pointer passed to it by the caller. To form a block structure to represent an entire page, an empty object of the Block class 1620 is first created, then the method Populate_Block is called on it with the root Table passed in.

The Page class 600 performs the following steps in order to form the Blocks structure:
1. Create empty Block with no parent (NULL) and set *root_block* pointer to the new Block.
2. Populate *root_block* by running the "Initial Block Population" algorithm on it, passing in a pointer to the root table.
3. Remove any empty blocks by calling the "Remove Empty Blocks" algorithm on *root_block.*
4. Ensure there aren't any blocks that have very little in them by calling the "Move Under-Populated Blocks" algorithm on *root_block.*

### 7.2.1 Initial Block Population Algorithm

15. The pointer *start_table* is passed in by the caller.
16. Create empty child block and set the *current_block* pointer to this.
17. Set *object_index* counter to 0.
18. If *object_index* < the number of objects owned directly by *start_table*, continue to step 5. Else go to step 13.
   19. Set the *current_object* pointer to the object directly owned by table *start_table* at index *current_object.*
   20. If *current_object* points to a Text object, then go to step 7. Else go to step 9.
      21. Add a copy of the pointer *current_object* to the Block pointed to by *current_block.*
      22. Increment *object_index* and go to step 4.
      23. Add the contents of the table pointed to by *current_object* to the *current_block* by running this algorithm on *current_block.*
      24. Instruct *current_block* to calculate its statistics.
      25. Create another empty child block and set the *current_block* pointer to this.
   26. Increment *object_index* and go to step 4.
27. If *current_block* is empty, delete it.
28. End.

### 7.2.2 Remove Empty Blocks Algorithm

Set *block_index* counter to 0
If *block_index <* the number of blocks owned by this block, go to step 3. Else End.
Set *current_block* to the block owned by this block at index *block_index*.
If *current_block* owns no text object, go to step 5. Else go to step 7.
Insert the contents of *current_block* into the parent of *current_block* at the index of *current_block* in the parent block + 1.

Remove *current_block* from the contents of *current_block's* parent.
Increment *block_index* and go to step 2.

### 7.2.3 Move Under-Populated Blocks

1. Set *block_index* counter to 0.
2. Set *iterations* counter to 0.
3. Set *max_iterations* limit to appropriate value (say, 3000).
4. Set *min_num_text_per_block* to appropriate value (3).
5. If *block_index <* the number of Blocks owned by this Block, and *iterations < max_iterations*, go to step 6. Else End.
   6. Set *current_block* to the Block owned by this Block at index *block_index.*
   7. Instruct *current_block* to calculate its statistics.
   8. If the number of objects with text or numbers directly owned by *current_block < min_num_text_per_block*, and the total number of characters belonging to those objects directly owned by *current_block < min_num_text_per_block* × 15, then go to step 9. Else go to step 14.
      9. Attempt to set *next_block* to the Block owned by this Block at index *block_index +* 1. If succeeded go to step 10, else go to step 14.
         10. If the parent of *next_block* is *current_block,* then go to step 11, else go to step 12.
            11. Combine the contents of *next_block* with *current_block* at the index of *next_block* in current_*block* + 1. Go to step 13.
            12. Combine the contents of *current_block* with *next_block* at index 0.
         13. Set *block_index* to -1.
      14. Increment *block_index*.
      15. Increment *iterations.*
      16. Go to step 5.

### 7.3 Section Generation Algorithm

1. If value of *ideal_num_sections* passed into algorithm is > 0, go to step 3. Else, go to step 2.
   2. Calculate an appropriate number of sections based on the number of tables and characters on the page (the size and complexity): *ideal_num_sections =* (total num characters ÷ 1400) + (total num tables ÷ 10). Limit *ideal_num_sections* to between 1 and 10 to prevent an unreasonable number of sections.
3. Set *blocks* as a pointer to the root Block structure.
4. Set *desired_section_size* to = size index of *blocks* ÷ *ideal_num_sections*.
5. Set *min_section_size* to = 0.4 × *desired_section_size.*
6. Set *max_section_size* to = 2.2 × *desired_section_size.*
7. Set *max_num_epochs to* 5.
8. Set *max_num_sec_size_stage_epochs* to 5.
9. Set *max_num_sec_num_stage_epochs* to 10.
10. Set *epoch* to 0.

### [Stage 1: Attempt to make the num of L1 blocks = the ideal num of sections]

11. Set *sec_num_stage_epoch* to 0.
12. Increment *epoch*.
13. If the number of blocks owned directly by *blocks* (the number of level 1 blocks) is < *ideal_num_sections*, then go to step 14. Else go to step 25.
   14. Set *num_failed* to 0.
   15. Set *block_index* to 0.
   16. Set *biggest_block* as a pointer to nothing *(null).*
   17. If *block_index <* the number of L1 blocks in *blocks,* go to step 18. Else go to step 21.
      18. Set *current_block* to the L1 block owned by *blocks* at index *block_index.*
      19. If *biggest_block* does not point to a block yet, and it has not been proved previously that *current_block* cannot be split; or if *biggest_block* does point to a block, and *current_block's* size index is > *biggest_block's* size index, and it has not been proved previously that *current_block* cannot be split, then set *biggest_block* to *current_block.*
      20. Increment *block_index* and go to step 17.
   21. If *biggest_block* does not point to a block, then go to step 24.
      22. Attempt to split *biggest_block* into 2 separate blocks, at the point between 2 of its child blocks that results in the 2 sets of blocks either side of the split having the most similar size index value.
      23. If the split failed, set a flag in the *biggest_block* to indicate the fact and increment *num_failed*.
   24. If *biggest_block* could not be split, and *num_failed <* the num of L1 blocks, and *biggest_block* doesn't point to *null,* then return to step 15. Else, go to step 26.
25. If the number of L1 blocks is > *ideal_num_sections*, then attempt to combine the contents of the smallest L1 block with the block following it (add contents to start of next block). If this fails, attempt to combine its contents with the block preceeding it (add contents to end of previous block).
26. Increment *sec_num_stage_epoch*.
27. If the number of L1 blocks is not = to *ideal_num_sections*, and *sec_num_stage_epoch < max_sec_num_stage_epochs* then go to step 13.
28. If *epoch = max_num_epochs* then go to step 43.

### [Stage 2: Attempt to make all L1 blocks a valid size]

29. Set *sec_size_stage_epoch* to 0.
30. Populate a vector *block_set* with the set of L1 blocks.
31. Randomly shuffle the contents of *block_set* (randomize their positions in the vector).
32. Set *found_invalid_sized_section* to false.
33. Set *block_index* to 0.
34. If *block_index* < the number of L1 blocks, go to step 35. Else go to step 38.
   35. Set *current_block* to the L1 block at index *block_index* in *blocks.*
   36. If the size index of *current_block* is *> max_section_size*, set *found_invalid_sized_section* to true, then attempt to split *current_block* into 2 separate blocks, at the point between 2 of its child blocks that results in the 2 sets of blocks either side of the split having the most similar size index value.
   37. If the size index of *current_block* is *< min_section_size*, set *found_invalid_sized_section* to true, then attempt to combine the contents of the smallest L1 block with the block following it (add contents to start of next block).
      If this fails, attempt to combine its contents with the block preceeding it (add contents to end of previous block).
38. Increment *sec_size_stage_epoch*.
39. Increase *max_section_size* by (*max_section_size* ÷ *sec_size_stage_epoch*)
40. Decrease *min_section_size* by (*mm_section_size ÷* (*sec_size_stage_epoch* × 2))
41. If *found_invalid_sized_section* is true and *sec_size_stage_epoch < max_sec_size_stage_epochs* then go to step 31.
42. If the number of L1 blocks is not = to *ideal_num_sections* and *epoch < max_num_epochs* then go to step 11.

### [Stage 3: Use L1 Blocks as Sections and assign Titles]

43. Instruct the *blocks* object to calculate its statistics.
44. Set *num_text_areas* to 0.
45. Set *num_menus* to 0.
46. Set *block_index* to 0.
47. If *block_index* is < the number of L1 blocks in *blocks,* go to step 48. Else go to step 66.
   48. Set *current_block* to point to the L1 block in *blocks* at index *block_index.*
   49. Create a new section with ID *block_index* a store a pointer to it as *added_section.* Add the new section to a vector.
   50. Add a copy of all references to text objects belonging to *current_block* (including nested ones) to *added_section*.
   51. Instruct *added_section* to calculate its properties.
   52. Instruct *added_section* to delete any titles that were generated for it.
   53. Set *child_index* to -1.
   54. If *child_index <* the number of L1 blocks owned by *current_block,* go to step 55. Else go to step 65.
      55. If *child_index* is > -1, set *current_child* to the L1 block owned by *current_block* at index *child_index.* Else, set *current_child* to *current_block.*
      56. Instruct *current_child* to calculate its titles.
      57. Set *best_title* to the first Title object owned by *current_child* with the most number of reasons. If *current_child* has no Title objects associated with it, set *best_title* to *null.*
      58. If *best_title* is not *null,* and it is a valid title (it has enough valid text in it), then go to step 59. Else, go to step 60.
         59. Add *best_title* to *added_section's* set of Titles. Go to step 64.
         60. Add a new title object to *current_section* and reference it as *title.*
         61. If *added_section* is a LINK_LIST, then set *title_text* to "Menu " + the value of *num_menus*, and then increment *num_menus*.
         62. If *added_section* is not a LINK_LIST, then set *title_text* to "Text area " + the value of *num_text_areas*, and then increment *num_text_areas*.
         63. Add a new Text object to *title* containing the text *title_text*.
      64. Increment *child_index* and go to step 54.
   65. Increment *block_index* and go to step 47.
   66. End.

### 8. Object Property Analysis and Assignment

As discussed earlier, Text objects 810 store not only text but also the tags and attributes that have been applied to that text in the Web page. This is useful, but does not satisfactorily reformat Web pages from HTML into an easily understandable object representation. Tags and attributes are HTML codes, not high-level descriptive properties. What is needed is a way of taking a Text object's tags and attributes and generating a set of simple properties that can be used to describe that Text object 810. Once a practice for calculating and assigning these properties is in place, it becomes easy to add additional properties that utilise more complex methods in their assessment of the data related to each Text object 810. Property assignment need not stop at Text objects 810: Table and Section objects can be given properties based on the Text objects 810 within them. By assigning properties to objects in this way, the framework's representation of a Web page becomes more usable, understandable and maintainable.

A property is simply an integer bound to an enumeration; the enumeration names are defined in the global header file "*GlobalDefs.h*" that all classes include. This allows a set of properties to be stored as a simple integer array, which is very memory efficient.

Text object property assignment is simple in the main, as its tags represent quite clearly the features it possesses: a "B" tag means the text is bold, an "I" tag indicates it is italic, a "SIZE" attribute represents its size, and so on. Importantly, tables are assigned properties based on not only the Text objects 810 within them, but also on the way that text compares with the page's entire set of Text objects 810. For example, if a table's text is small on average, but the average text size for the whole page is tiny, then that table is given a greater importance rating.

As mentioned above, the key types of property assigned to a table are its *type, size,* and *importance*. In order to assess these qualities, *statistics* concerning the page need to be collated. The *TextStructure* class 1610 is used to contain these statistics, and *Tables* and *Sections* both inherit this class. The *TextStructure* statistics stored are further discussed below under the heading **"TextStructure Statistics".** Examples are the number of bold characters and an average size rating.

For instance, a table's *type* can be determined by the number of hyperlinks it contains and the average size of the text objects within it. Tables that are assigned the type of "link list" or "list" use the number of non-empty text objects belonging to them to determine their size. Tables assigned the "text box" type classification are given a "size score" and this is mapped to a rating from "tiny" to "massive". The importance level can be determined by accumulating "priority points". Varying numbers of these are given for many features such as the number of text objects exclusively containing upper-case letters, the number of particularly large text objects, and the number of bold characters. Sections can be assigned properties in a similar manner.

*Tables* and *Sections* are also given a *title,* which consists of a set of up to four text objects. The title is calculated by searching through the text objects in the table for the first set that exhibits properties that indicate importance. This is assessed by comparing the size of each object against the average for the table, and by looking for high usage of special text formatting such as *bold* and *italic.*

### 8.1 Text object property descriptions

### TINY_TEXT_SIZE / SMALL_TEXT_SIZE / MEDIUM_TEXT_SIZE / LARGE_TEXT_SIZE / MASSIVE_TEXT_SIZE

1. Go through each tag owned by text from most old to most recent looking for font size declarations
2. If absolute size declaration, set current size to this; if relative size declaration, adjust current size accordingly
3. Assign size property to VERY_SMALL, SMALL, MEDIUM, LARGE or VERY_LARGE depending on final current size setting. If no size is given use either a) the most recent size declaration given in the HTML code, or if not available then b) a medium size. If there is no text, do not assign a text size property.

### ITALIC_TEXT_FONT / BOLD_TEXT_FONT / UNDERLINED_TEXT_FONT /-STANDARD_TEXT_FONT

1. Search for the presence of the relevant tag (I/B/U). If found the most recent one is used.
2. Assign the matching property, or STANDARD_TEXT_FONT if none of the above tags were found.

### ALL_CAPS

1. Check that all letters in the text are upper-case.
2. Check that there are at least 4 letters in the text.
3. If both conditions are met assign the property to the text.

### HAS_LETTERS_OR_NUMBERS

Set if the text contains at least one letter or number

### IS_AN_IMAGE

Set if this text is an image or part of an image map

### IS_SCRIPT

Set if this text is script code. If this is the case it will not be played to the user or used in statistic / property / title generation

### LINKS_ON_SITE / LINKS_OFF_SITE

1. Look for presence of A tag (or JavaScript links).
2. If this is found look at given URL, if base of URL is same as current page, assign the LINKS_ON_SITE property, else assign LINKS_OFF_SITE.

### 8.2 TextStructure property assignment

Note: Text objects 810 containing script code are ignored.

### LINK_LIST / LIST / TEXT_BOX / MENU

- If num hyperlink characters is > than num normal characters, assign LINK_LIST: there is a high proportion of hyperlink text.
- If there are > 3 text objects and the num of normal chars is < the num of text objects × 12, then assign LIST: there are many text objects with little text in them.
- If neither LINK_LIST nor LIST was assigned, assign the TEXT_BOX property.
- If LINK_LIST has been assigned and the average number of words per text object is < 2.0, then assign MENU: there are many hyperlinks with little text in each.

### TINY / SMALL / MEDIUM / LARGE / MASSIVE

- If this is a LINK_LIST or a LIST, calculate size rating based on the number of text objects it contains:
   - If the number of Text objects with HAS_LETTERS_OR_NUMBERS property is:
      - <= 5, assign TINY
      - > 5 & <= 10, assign SMALL
      - > 10 & <= 15, assign MEDIUM
      - > 15 & <= 30, assign LARGE
      - > 30, assign MASSIVE
- If this is a TEXT_BOX, calculate size rating based on the number of characters it contains:
   - Calculate size score; size score = num normal chars + (num hyperlink chars × 1.5) + (num images × 20)
   - If size score is:
      - < 100, assign TINY
      - >= 100 & < 300, assign SMALL
      - >= 300 & < 500, assign MEDIUM
      - >= 500 & < 1000, assign LARGE
      - >= 1000, assign MASSIVE

### HAS_IMAGE

- If there is an image owned (directly or indirectly) by this TextStructure, assign HAS_IMAGE property

### LOW_IMPORTANCE / MEDIUM IMPORTANCE / HIGH IMPORTANCE /-VERY_HIGH_IMPORTANCE

- First calculate a property score:
- Items that use a larger than average font size are almost always more important, and items that use a smaller than average font size are almost always less important:
   - *Priority score += average size - (average size of root structure* × *100)*
- Add 20 points if there is a text object with particularly large text in this table:
   - *if (num large text objects >= 1) then (priority score += 20)*
- Add 5 points for every large fonted text object in the table:
   - *Priority score += num large text objects* × *5*
- Underlined items are usually more important. If over 1/5 of characters in this structure are underlined, and this is not true of the entire page, then add priority to this structure.
   - *if (underlined chars > (total chars* ÷ *5)) & (num underlined chars in root structure* <= *total chars in root structure* ÷ *5)) then priority score += 20*
- Items that use ALL CAPS (upper case) are usually more important. If over 1/5 of characters in this structure are ALL CAPS, and this is not true of the entire page, then add priority to this table.
   - *if (all caps chars > (total chars* ÷ *5)) & (num all caps chars in root structure <= total chars in root structure* ÷ *5)) then priority score += 15*
- Bold items are usually more important. If over 1/5 of characters in this structure are bold, and this is not true of the entire page, then add priority to this structure.
   - *if (bold chars > (total chars ÷ 5)) & (num bold chars in root structure <= total chars in root structure* ÷ *5)) then priority score += 20*
- Italic items are usually more important. If over 1/5 of characters in this structure are italic, and this is not true of the entire page, then add priority to this structure.
   - *if (italic chars > (total chars ÷ 5)) & (num italic chars in root structure <= total chars in root structure* ÷ *5)) then priority score += 20*
- Items that have an image are usually more important. Add 5 priority points for each image in the table
   - *Priority score* += *num images × 5*
- Now assign the important property based on the priority score:
- If size index is:
   - <= 0, assign LOW_IMPORTANCE
   - > 0 & <= 25, assign MEDIUM_IMPORTANCE
   - > 25 & <= 50, assign HIGH_IMPORTANCE
   - > 50, assign VERY_HIGH_IMPORTANCE

Note that given the text properties, these TextStructure properties can be assigned in different ways. The rule-based approach is simple and fairly effective, but it may be preferable to use a different approach, especially if more properties are added. For instance, a trained back-propagation neural network could perform this property assignment task.

### 8.3 TextStructure Statistics

TextStructure objects have the following statistics:
- Number of normal characters
- Number of hyperlink characters
- Total Number of characters
- Total Number of direct characters (those owned only by this TextStructure, not nested ones)
- Number of off site links
- Number of large text objects
- Number of images
- Number of words
- Average size (1 = tiny, 5 = massive)
- Number of objects without size
- Number of objects containing at least one letter or number
- Number of direct objects containing at least one letter or number
- Number of bold characters
- Number of underlined characters
- Number of italic characters
- Number of characters from Text objects that have the ALL_CAPS property
- Size index (an amalgum of total number of characters and number of text objects)

### 8.4 TextStructure Title Assignment

Each TextStructure object can own one or more Title objects, each of which store pointers to one or more Text objects that represent one potential title. Each of these Title objects also store a set of "Reasons", which represent why the Text object(s) could be considered a title in the structure. Using these reasons, a higher level class can then decide which title to use for each TextStructure object if one is needed.

Potential titles can be calculated for each Block. After the Blocks in a page have been used to form Section objects, each Section uses the "best" title from each of the Blocks that were used to form it. The "best" title can be simply taken to be the one with the most title reasons. If any of the Blocks do not own any Title objects, then a generic title is used based on the type of the Block and the number of unnamed Blocks that have been used previously, for example: "Text area 2" or "Menu 4".

The purpose of this process is to generate a title that is based on the sub-components of each TextStructure. A root TextStructure (one that encompasses the entire page) would have a very long title, eg "Menu 1, news, sports, menu 2, weather and text area 1". A TextStructure that is based on only one table would have only one element to its title, e.g. "share prices".

### 8.4.1 Reason Assignment Rules:

- First get a list of all images on the page (from the root structure)
- If a text object is an image that is repeated elsewhere on the page, it is likely to be something like a line or other graphical feature - for this reason it is ignored.
- Also ignore any text objects that are script code, and those that do not contain any letters or numbers.
- Establish the meaning of "most". For instance it can be defined as 70%, i.e. "most characters are bold" = 70% of character are bold.
- Cycle through each valid text object and have a temporary container for a set of Reasons ready.

**MORE_BOLD:** If a Text object is bold, and most text in this structure isn't, then add this Reason.
**MORE_ITALIC:** If a Text object is italic, and most text in this structure isn't, then add this Reason.
**MORE_UNDERLINED:** If a Text object is underlined, and most text in this structure isn't, then add this Reason.
**MORE_CAPS:** If a Text object consists of 4 or more letters and all letters in the text are upper-case, and this is not true of most text in this structure, then add this Reason.
**LARGER:** This Text is larger than most other Text in this structure (the definition for "most" is not used for this one). "Larger" is calculated as follows:
if current text has property SMALL_TEXT_SIZE & average_size < 1.5, or current text has property MEDIUM_TEXT_SIZE & average_size < 2.5, or current text has property LARGE_TEXT_SIZE & average_size < 3.5, or current text has property MASSIVE_TEXT_SIZE & average_size < 4.5, then add this Reason.
**MUCH_LARGER:** This Text is much larger than most other text in this structure (the definition for "most" is not used for this one). "Much_larger" is calculated as follows:
if current Text has property MEDIUM_TEXT_SIZE & average_size < 2, or current text has property LARGE_TEXT_SIZE & average_size < 3, or current text has property MASSIVE_TEXT_SIZE & average_size < 4, then add this Reason.
**DIFFERENT_BACKGROUND_COLOUR:** If this Text's background colour is different to most others in this structure, add this Reason.
**DIFFERENT_FOREGROUND_COLOUR:** If this Text's foreground colour is different to most others in this structure, add this Reason.
**TOP_OF_STRUCTURE:** If this Text is the first valid text object in this structure, add this reason.
**NOT_A_LINK_IN_LINK_LIST:** If this structure is a LINK_LIST, but this text is not a link, then add this reason.
**PICTURE_AMONGST_TEXT :** If this is ALT text for a picture, and most other text in the structure has no picture, then add this reason.
**HAS_COLON_OR_HYPHEN:** If this text has a colon or a hyphen as its last visible character, then add this reason.

In the above, a unit of size in the range 1 to 5 is used for the reasons **"LARGER"** and **"MUCH_LARGER"**. The range could be selected to have any appropriate length and granularity but in this embodiment 1 = TINY_TEXT_SIZE and 5 = MASSIVE_TEXT_SIZE. Hence if there are three TextStructures, two small and one medium, the average size value is (2 + 3)/3 = 2.333.

### 9. OOWRF PROCESSING OF A WEB PAGE

Figure 17 shows a typical Web page that might be accessed by a user. The sequence of steps that might be taken by the VoiceWeb reformatting engine are described below. (It might be noted that parts 1) to 3) of the following description relate directly to Figure 17 but parts 4) to 6) relate to a page which is of a generally similar layout but has somewhat different content.)
1) Definitions for HTML / WAP / other tags, character codes, and style sheet properties are read from definition files and stored in memory as TagDef objects. An example of TagDef object creation is: 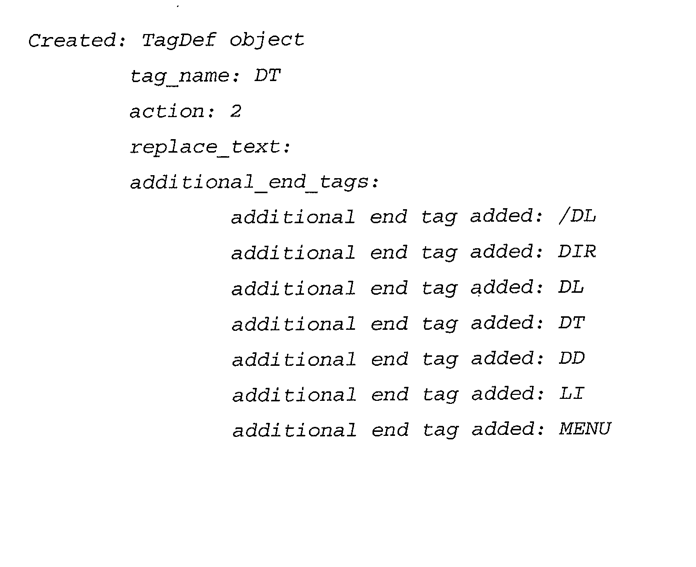
2) The Web page is parsed and Tag objects created as they are encountered. Text objects are then created with the set of Tag objects associated with them. Tag objects store a set of Attribute objects. Style sheets are processed and stored as StyleProperty objects whose equivalent tags are added to any Text objects that use the style. An example of Text object creation, together with associated Tag objects and a StyleProperty object, is:

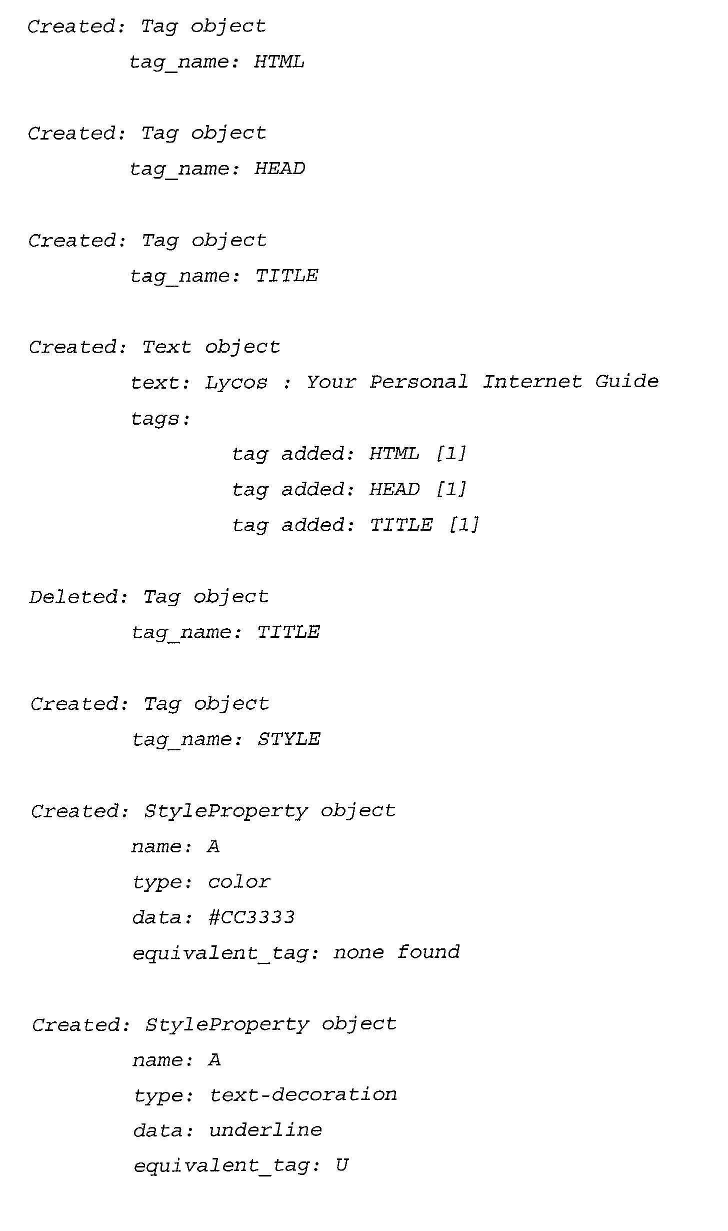

As discussed above under the heading **"6.2.1 The "Current Tags" Algorithm",** it is beneficial to keep track of which Tag objects are currently open. Tag objects and their Attribute objects are put into a temporary vector, like a queue, as they are encountered in the HTML source code. When a piece of text is encountered and a Text object created, it is added with a copy of those Tag objects that are currently in this temporary vector. When a tag block is terminated in the HTML source code, the Tag object representing it is deleted from the temporary vector and this can be seen above where the Tag object "TITLE" is shown being deleted.
3) Each Text object is assigned a set of properties based on its text and its set of associated Tags. Examples of property assignment to Text objects are:
   *Text object name: " your personal internet guide"*
      *Properties: Large, Bold, Has letters*/*numbers, Near top of screen*
   *Text object name: ""*
      *Properties: Near top of screen, Image*
   *Text object name: " Home "*
      *Properties: Small, Bold, Underlined, Has letters*/*numbers, Near*
      *top of screen, Links on-site*
   *Text object name:* "|"
      *Properties: Tiny, Standard, Near top of screen*
   *Text object name: " Email* "
      *Properties: Small, Bold, Underlined, Has letters*/*numbers*, *Near*
      *top of screen, Links on-site*
   *Text object name:* "*30% off DVDs* at *bol.com*"
      *Properties: Tiny, Bold, Underlined, Has letters*/*numbers, Near*
      *top of screen*, *Links off-site*
4) Text objects are grouped under Table objects, which each have properties assigned to them. Tables can be nested inside one another and represent the structure of the page.
   Table #0 is abstract and represents the entire page (by encapsulating all other Tables). Examples of property assignment to a set of tables, followed by a nested table structure representing part of a page, together with grouped Text objects, are:
   *Table 0 (level 0: parent table: none)*
      *Properties: List of links, Massive, Has an image, Very high importance*
   *Table 1 (level 1: parent table: 0)*
      *Properties: Text list, Tiny, Has an image, Very high importance*
   *Table 2 (level 1: parent table: 0)*
      *Properties: List of links, Menu, Small, Has an image, Medium importance*
   *Table 3 (level 2: parent table: 2)*
      *Properties: List of links, Menu, Small, Has an image, Medium importance*
   *Table 4 (level 1: parent table: 0)*
      *Properties: List of links, Tiny, Has an image, Low importance*
   *Table 5 (level 1: parent table: 0)*
      *Properties: List of links, Small, Has an image, Low importance*
   *Table 6 (level 2: parent table: 5)*
      *Properties: List of links, Tiny, Low importance*
   *Table 7 (level 2: parent table: 5)*
      *Properties: Text list, Tiny, Low importance* 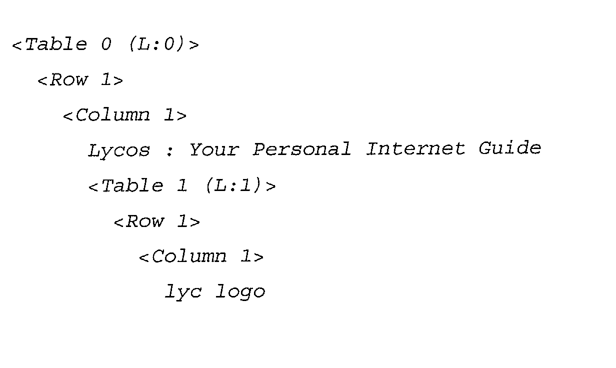 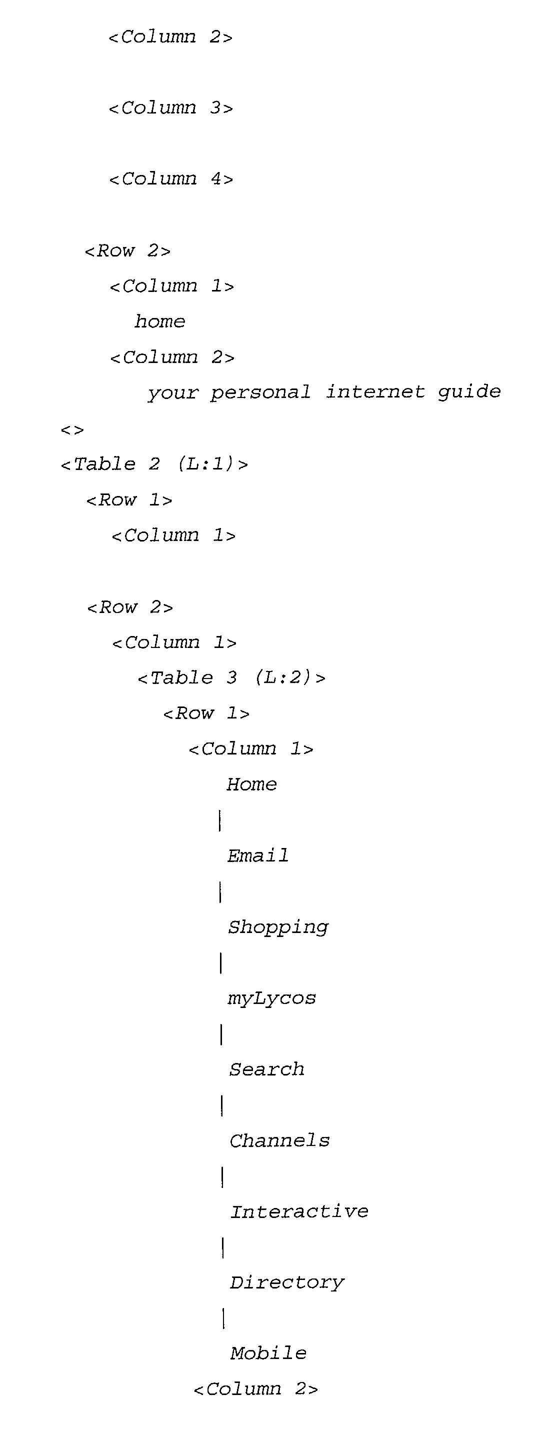 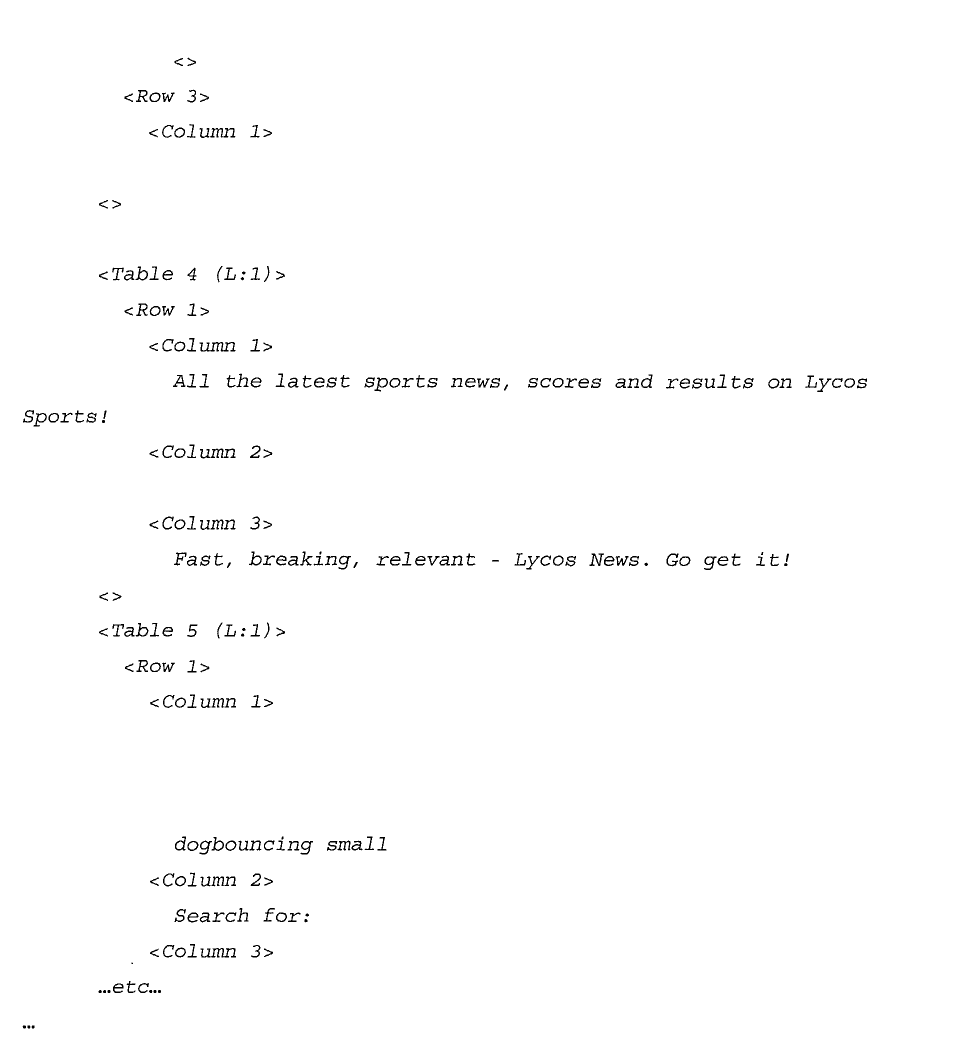
5) The Table hierarchy is then used to construct a Block structure. The algorithm used is modified automatically if the structure of the page is weak in order to take advantage of any declared formatting tags. For instance, if a page contains few tables, it is likely to be advantageous to split up the blocks further and this can be done at rows and at <P> and <DIV> tags. The structure is also manipulated to move under-populated and empty blocks. 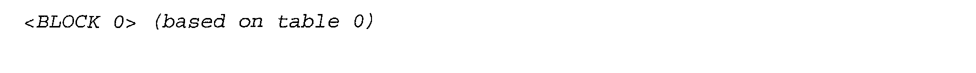 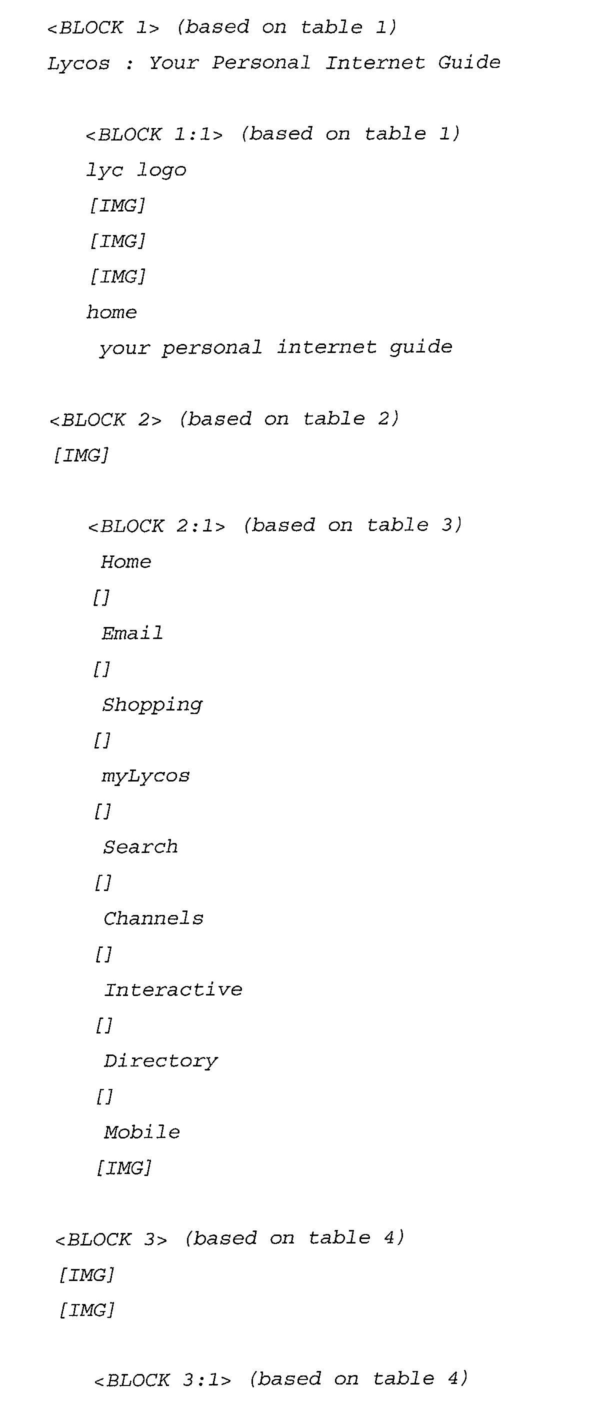 *All the latest sports news, scores and results on Lycos Sports! [IMG]*
   *Fast, breaking, relevant - Lycos News. Go get it!* 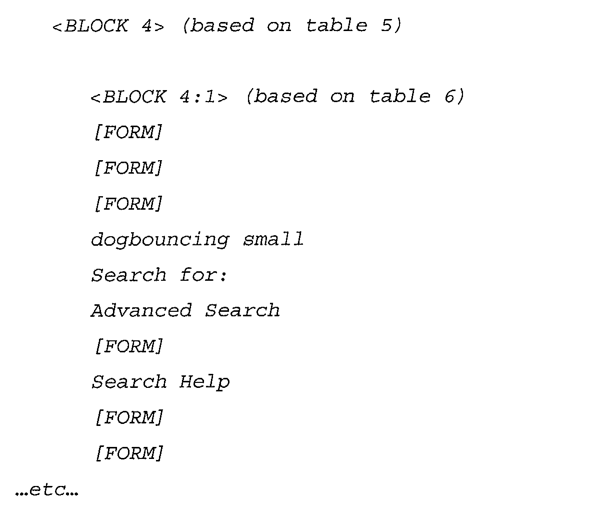
6) The Block structure is further manipulated to construct a given or automatically assigned number of Sections, an example of a section being as shown below:
   Section 1
      Section name: your personal internet guide, Menu 1, Link area 1, and Search for:
      Properties: List of links, Large, Has an image, Very high importance
      Titles:
         your personal internet guide
         Menu 1
         Link area 1
         Search for:
      Text 000: Lycos : Your Personal Internet Guide (T:0)
      Text 001: lyc logo (L) (T:1)
      Text 005: home (T:1)
      Text 006: your personal internet guide (T:1)
      Text 008: Home (L) (T:3)
      Text 010: Email (L) (T:3)
      Text 012: Shopping (L) (T:3)
      Text 014: myLycos (L) (T:3)
      Text 016: Search (L) (T:3)
      Text 018: Channels (L) (T:3)
      Text 020: Interactive (L) (T:3)
      Text 022: Directory (L) (T:3)
      Text 024: Mobile (L) (T:3)
      Text 028: All the latest sports news, scores and results on Lycos Sports! (L) (T:4)
      Text 030: Manage money simply-Lycos Money Channel. (L) (T:4)
      Text 035: dogbouncing small (L) (T:5)
      Text 036: Search for: (T:5)
      Text 037: Advanced Search (L) (T:6)
      Text 039: Search Help (L) (T:6)
      Structure 000 (ID: 3805760): your personal internet guide.
      Structure 001 (ID: 3870544): Menu 1.
      Structure 002 (ID: 3869936): Link area 1, and Search for:
   ...etc...

### 10. SPECIAL FEATURES

Various special features can be implemented in embodiments of the present invention and these are discussed below.

### 10.1 User selection of a grammar

The definitions for static grammars for the system can be stored on the hard drive as ordinary text files. These describe the various combinations of words the user can use in order to perform a certain task at a certain point in a dialogue (i.e. the ways in which a user can respond to a question posed to them by the voice interface 210). These definition files can be compiled much like source code for an application, and the resultant files are loaded by a "Recognition server" application on start up. Therefore, the static grammar of an application cannot be changed unless the application and recognition server are shut-down and the grammar files are re-compiled.

However, dynamic grammars are not stored anywhere; they are generated by the application itself. An example of where dynamic grammars are used is when the user is prompted to say the voice label for a Web page they have in their profile. Before asking the question, the application looks up the labels of each page in the user's profile 225 in the database, and these are then temporarily added to the current grammar. The system will then understand the user when they say one of the voice labels and go to the page the recognized label represents.

Dynamic grammars are used for the voice labels for Web pages, the titles of sections, and when the user wants to search for a particular word or phrase on the Web page.

The following is a simplified example of a static grammar, "VoiceWeb.grammar", for a menu supporting user selection of a start page. Because start page labels can be user specific, the static grammar triggers use of a dynamic grammar, given via a user profile, at the point of data entry to identify the start page.

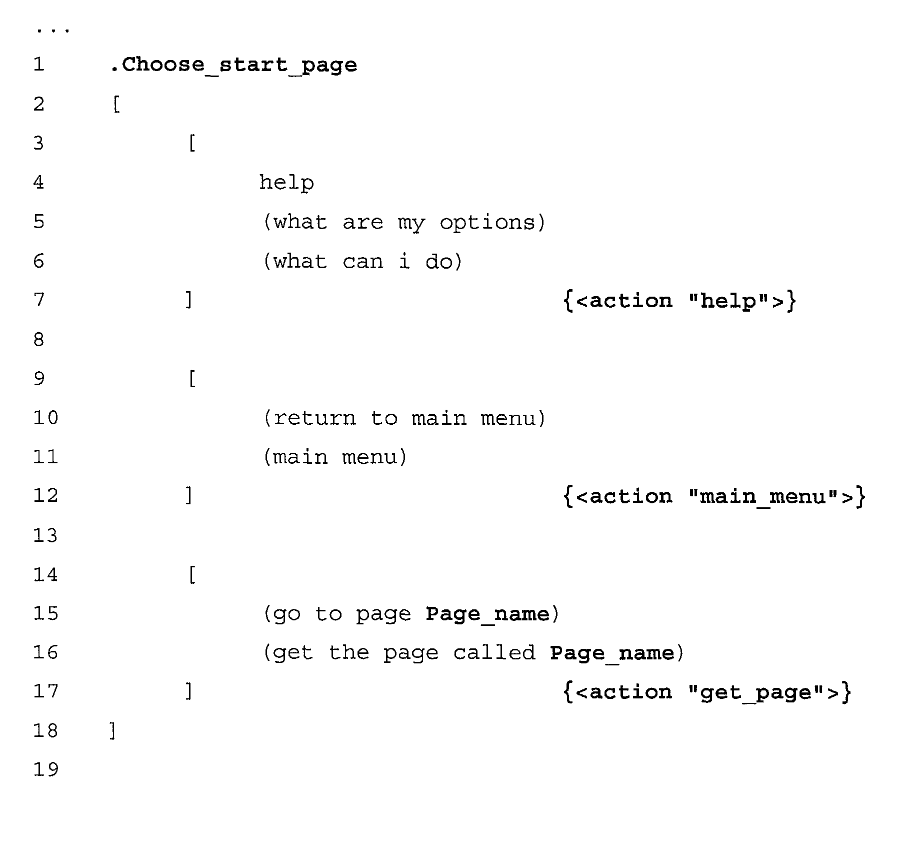

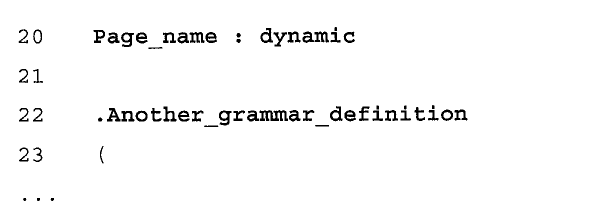

**Lines 1 to 7** show the grammar based phrases ("help", "what are my options", "what can I do") the user can input which will be recognised. The system responds by sending {<action "help">} to the software process running the dialogue with the user and the value "help" is picked up by the dialogue software for the action on this menu. It then plays a help message to the user.

**Lines 9 - 12** are similar to the "help" definition, except they define what can be said by the user in order to return to the main menu.

**Lines 14-17** define what the user can say to trigger the action "get_page". Because users can define page labels via their user profiles, it is now necessary to trigger use of a dynamic grammar to interpret a valid page name for that user. The grammar compiler sees **Page_name** as the name of a grammar as it starts with a capital letter. In **line 20, Page_name** is identified as a dynamic grammar (so there is no definition for it). Before it gets to the menu, the software process that is running the dialogue with the user will now get the current user's page names from the database and use them to define the **Page_name** grammar. It will also add an interpretation for each one, for instance one might be: **(b b c news) {<page_url "http://www.bbc.co.uk/news">}.** Then when the user says "Get the page called BBC News" at the menu, the dialogue software gets sent two pieces of information: the action **("get_page"),** and the page URL **("http://www.bbc.co.uk/news"**).

**Lines 21** on: The grammar file contains similar definitions for each menu in the system, for example where the user can choose what section to read, or when the page is being read out and the user can choose to skip, pause, etc...

A major problem of grammar-based recognition is that the system must have some idea of the kind of things the user can say when a question is asked. For a text input field on a page, the user could input anything. In order to generate a dynamic grammar of the things a user can say when asked what they want to enter into a field, it is also possible to enable a user or system administrator to use the Web interface to point at a particular URL for a grammar for a particular field. i.e. a page that just lists all the possible items. The system could take the words from the Web page at that URL and the user could then say any word appearing on the Web page to have the word entered into the input field.

An example of a scenario suitable for using the Web interface to point to a URL for a specialised grammar is a product ordering system. There might be a text input field where the user is required to input the name of the product they are looking for. The grammar for this input field might be generated by looking at a Web page whose URL is given for that input field in the Web interface. That Web page may just be a list of the products available, which could be generated specially by the author of the Web site by looking at their database of products and inserting the product names from the database into a Web page.

Grammar generation lends itself to several different possibilities. For instance, a "spider" process could be used to crawl the Web looking for services and their names. For example, a process could be set up to go through the contents of a Web directory service and store the names of links to services for use as a grammar. As mentioned above, it is also possible for a system administrator to define a grammar and these can be made available in a pre-defined list for the user to add to their profile 225. The user can get access to such pages by selecting for instance a screen button labelled "Add pre-configured page". The data from the selected page will be copied to the user's profile 225 and can optionally be edited by the user.

### 10.2 Default Grammar

If the system cannot deduce a relevant grammar for a field, then it is possible to use a default large noun based grammar. For instance, it would be possible to have a default grammar that comprises a set of a thousand or so common nouns.

### 10.3 User Inputs

It is possible for a user to use conventional simple messaging (SMS) to make inputs, either alongside use of the speech interface 210 or independently if necessary. For instance, a user could make SMS inputs and the VoiceWeb system can phone them back with a response or save information for the next time the user phones in. As long as there is a telephone number on which to receive SMSs at the VoiceWeb system, then it is possible to add SMS inputs to an existing grammar for a particular input field. Alternatively, it would be possible to use the keypad of a telephone already connected to the VoiceWeb speech interface 210 if the relevant letters are read out as the user presses the keys.

### 10.4 Labels for Picture-based Links

It is possible to use the URL pointed to by a picture based link to determine a label for that link. - or the ALT (alternative text) tag if it exists for the gif button, or a combination of the two, to determine which is the most natural English tag. Alternatively, it is possible to use the filename of the image itself to describe it. Forward caching can be used to speed this process up by loading pages links point at whilst viewing a current page.

### 10.5 Maintaining Historical Context

It is possible to maintain a historical context and to use that to determine what might be important on a current page. For example, it may be that a user is filling in form information on a page. It may be necessary to return the page to the user, for instance with a flag to say that necessary information has not been entered or with additional fields as a consequence of what the user entered. To avoid the user having to start at the first field again, fields the user has already filled in should be re-filled in automatically on the returned page.

### 10.6 Presenting a Page in Logical Regions

This is a consequence of the use of sections as described above. Presentation of a page to the user can be expressed in logical regions of the page particularly where the sections are assigned titles based on their contents because the page can be presented in terms of the numbers of different sections and of what their titles indicate. The user can also be given information to keep them signposted during reading of a page. For instance, when reading a new page the page name is read out e.g. "Page: BBC News". When reading a new section the user is told, e.g. "End of section 2. Reading section 3". The user can also be told the type of block being read.

A logical region, such as a section or a block, can be navigated independently. The user can select a block or region to be presented to them and can skip between them by saying "skip" or "skip back". Otherwise the contents of the blocks and sections will usually be read in the order they appear.

### 10.7 Voice Cookies for Data Entry

Voice cookies can be used to enter predetermined labelled strings, such as e-mail addresses or a person's name. This can be set up via the Web interface. The user adds a voice cookie to their user profile 225 by selecting it from a list, e.g. "E mail", or creating it manually if it is obscure. The user gives the data for the voice cookie, e.g. "user.name@bt.com". The voice interface then searches the text associated with fields on a Web page for the text automatically associated with each voice cookie (e.g. "email" or "e-mail"). The user is then asked if they want to insert the data for that voice cookie into the field.

Such voice cookies can be global (active in every case) or local (active only on a page or URL root). For example, a user might have two Web email accounts each with a different password, so the user would set up two "password" local voice cookies, one for each Web email site. They would likely want their name however to be input the same for every page they visit, so this would be a global voice cookie.

### 10.8 User-Defined Macros

The user or system administrator can define 'macros' with a voice tag that can be invoked on a particular page. These could also be global or local. Macros are a series of operations that would be automatically performed by the system upon activation by the user (by using a name for the macro set up in the Web interface). An example: User adds macro called "go to email inbox" to his profile 225. He then adds a series of actions to the macro: 1) go to email page (provides URL), 2) enter given username text into username field, 3) enter given password text into password field, 4) Press submit button. The user can then say "go to email inbox" from the voice interface and the system will perform these operations automatically and take the user to their inbox. Possibilities also arise to have "pre-configured" macros in the same vein as pre-configured pages, where the user has only to enter their specific information (e.g. username and password). This is potentially a powerful aspect of the present invention.

## Claims

1. A formatting engine, for formatting structured information which contains both content and descriptive material which describes that content, the formatting engine comprising:
i) an information processor for processing the descriptive material of the structured information; and
ii) information assembly means to assemble a representation of the information for access via a user interface
wherein the representation is assembled at least in part from the processed descriptive material.

2. A formatting engine according to claim 1, wherein the content comprises material intended for visual display to the user.

3. A formatting engine according to either one of the preceding claims wherein the descriptive material comprises instructions concerning layout and/or logical structure of content when displayed, the instructions being for use by equipment receiving the structured information for delivery to a user.

4. A formatting engine according to any one of the preceding claims adapted to process structured information formatted for a first type of user interface so as to reformat it for a second type of interface.

5. A formatting engine according to claim 4 wherein the first type of user interface is screen-based and the second type of interface comprises a voice-based interface.

6. A formatting engine according to any one of the preceding claims adapted to process as said structured information a Web page written in a markup language.

7. A formatting engine according to claim 5 which is adapted to assemble a representation of the information which provides an overview of the layout of the information when presented using the first type of user interface.

8. A formatting engine according to any one of the preceding claims, wherein the representation identifies at least one link to information at another location, and the formatting engine further comprises means to activate the identified link in response to a voice command received in relation to an identified link.

9. A formatting engine according to any one of the preceding claims, wherein the structured information may contain more than one item of content and the descriptive material may contain a value for an attribute of at least two items of content, the information processor being adapted to process the descriptive material by comparing values for that attribute for different items of content.

10. A formatting engine according to any one of the preceding claims, wherein the structured information may contain an indication of type for more than one item of content, and the information processor is adapted to process the descriptive material by collating data on indications of type for items of content so that the information assembly means can assemble a representation of the information which is at least partially based on such data.

11. A formatting engine according to any one of the preceding claims, wherein the information assembly means is arranged to provide a personalised framework from which locations for structured information from more than one source can be preselected for access via a user interface.

12. A formatting engine according to claim 11 wherein the personalised framework comprises one or more stored files.

13. A formatting engine according to any one of the preceding claims wherein the engine is adapted to assemble a representation of the structured information as a plurality of software objects.

14. A formatting engine according to any one of the preceding claims wherein the information processor is adapted to identify at least one indication of information component type in relation to components of structured information being processed, and to assign a title to a grouping of such components for use in an assembled representation of the structured information.

15. A method of building a representation of one or more files, for use in an audio description of the Web page, the method comprising the step of processing code for use in screen presentation of the file(s), said processing comprising:
i) assembling a set of content components, each content component comprising content for screen presentation together with one or more attributes of the content;
ii) assembling a set of one or more page sections, each page section being associated with one or more content components;
iii) processing the attributes of content component(s) associated with at least one section to generate at least one property of the section(s); and
iv) building a representation of the file(s) which supports a description of the at least one section, said description including said property or properties thereof.

16. A method according to Claim 15 wherein at least one property of a section is a relative property, generated with respect to processed attributes of content components associated with at least one other section of an assembled set.

17. A method according to Claim 16 wherein the relative property is generated with respect to processed attributes of content components associated with all other sections of an assembled set.

18. A method according to Claim 16 wherein at least one property of a section is a relative property, generated with respect to a predetermined value or range of values for that property.

19. A method according to any one of Claims 15 to 18 wherein the step of assembling the set of one or more page sections comprises the steps of:
vii) assembling a set of one or more page blocks, based on the structure of the code being processed, each block being associated with one or more content components; and
viii) processing the set of page block(s) to assemble the set of page sections, based on the distribution of content components amongst the page block(s).

20. A method according to Claim 19 wherein the code is written in a markup language and the set of page blocks is based on a nested table structure of the code.

21. A method according to any one of Claims 15 to 20 wherein the number of sections in a set of one or more page sections is determined according to an algorithm.

22. A method according to any one of Claims 15 to 20 wherein the number of sections in a set of one or more page sections is determined according to a user input.

23. A method according to any one of Claims 15 to 22 which further comprises the step of delivering the audio description to a user.

24. A method according to any one of Claims 15 to 23 which further comprises the step of referring to a specified location for information for use in interaction with a user in delivering the description of the at least one section.

25. A method according to Claim 24 wherein the specified location comprises a user profile.

26. A method according to either one of Claims 24 or 25 wherein the information comprises a grammar.

27. A method according to either one of Claims 24 or 25 wherein the information comprises or identifies code, and the method further comprises running said code.

28. A method according to any one of Claims 24 to 27 wherein the specified location comprises a stored Web page.

29. A method according to any one of Claims 23 to 25 which further comprises receiving user inputs during the course of delivery of the audio description and modifying the audio presentation in response to said user inputs.

30. A method according to any one of Claims 15 to 29 which further comprises referring to a user profile for use in interacting with a user to select and/or deliver a description of one or more files.
